(19) Europäisches Patentamt
European Patent Office
Office européen des brevets

(11) EP 2 935 489 B1

(12) # FASCICULE DE BREVET EUROPEEN

(45) Date de publication et mention de la délivrance du brevet:
**28.11.2018 Bulletin 2018/48**

(21) Numéro de dépôt: **13821848.2**

(22) Date de dépôt: **17.12.2013**

(51) Int Cl.:
***C09D 183/04*** (2006.01) ***C08L 83/04*** (2006.01)
***C08G 77/08*** (2006.01) ***B01J 31/22*** (2006.01)
***B01J 23/06*** (2006.01) ***B01J 23/26*** (2006.01)

(86) Numéro de dépôt international:
**PCT/FR2013/000345**

(87) Numéro de publication internationale:
**WO 2014/096566 (26.06.2014 Gazette 2014/26)**

(54) **COMPOSITION ORGANOPOLYSILOXANIQUE VULCANISABLE A TEMPERATURE AMBIANTE EN ELASTOMERE ET NOUVEAUX CATALYSEURS DE POLYCONDENSATION D'ORGANOPOLYSILOXANES**

ORGANOPOLYSILOXANZUSAMMENSETZUNG ZUR VULKANISATION IN EIN ELASTOMER BEI ZIMMERTEMPERATUR UND NEUE ORGANOPOLYSILOXAN-POLYKONDENSATIONSKATALYSATOREN

ORGANOPOLYSILOXANE COMPOSITION SUITABLE FOR VULCANISATION INTO AN ELASTOMER AT ROOM TEMPERATURE AND NEW ORGANOPOLYSILOXANE POLYCONDENSATION CATALYSTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1203517**

(43) Date de publication de la demande:
**28.10.2015 Bulletin 2015/44**

(73) Titulaire: **ELKEM SILICONES France SAS**
**69003 Lyon (FR)**

(72) Inventeurs:
- **MALIVERNEY, Christian**
  **F-69690 Saint Julien sur Bibost (FR)**
- **BLANC, Delphine**
  **F-69007 Lyon (FR)**
- **FEDER, Michel**
  **69100 Villeurbanne (FR)**
- **PLATEL, Delphine**
  **F-01800 Saint Maurice de Gourdans (FR)**

(74) Mandataire: **Mekki, Boualem**
**Elkem Silicones France SAS**
**Dépt. Brevets - Bât. 77**
**55, avenue des Frères Perret**
**69190 Saint-Fons (FR)**

(56) Documents cités:
**GB-A- 859 724**
**US-A- 3 127 363**
**US-A1- 2008 207 938**
**US-A1- 2011 046 304**
**US-B1- 6 245 952**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 935 489 B1

## Description

La présente invention concerne une composition comprenant au moins un composé organosilicié **A** comprenant au moins deux groupements hydrolysables et condensables, identiques ou différents, ou au moins deux fonctions silanols ≡SiOH, réticulable, durcissable ou vulcanisable dès la température ambiante en élastomère par polycondensation et ne contenant pas de catalyseurs à base d'alkylétain qui présentent des problèmes de toxicité.

L'invention concerne aussi de nouveaux catalyseurs de polycondensation dans la chimie des composés du silicium et en particulier dans la chimie des silicones et leurs utilisations comme catalyseurs de la réaction de polycondensation de composé de silicium comprenant au moins deux groupements hydrolysables et condensables, identiques ou différents, ou au moins deux fonctions silanols ≡SiOH.

Les formulations des compositions de silicones, réticulant par polycondensation font généralement intervenir une huile silicone, généralement un polydiméthylsiloxane, à terminaisons hydroxylées, éventuellement pré-fonctionnalisées par un silane de façon à présenter des extrémités hydrolysables et condensables, un réticulant, un catalyseur de polycondensation, classiquement un sel d'étain ou un titanate d'alkyle, le plus souvent avec une charge de renfort et d'éventuels autres additifs comme des charges de bourrage, des promoteurs d'adhérence, des colorants, des agents biocides, etc.

Ces compositions silicones qui « durcissent » par polymérisation et/ou réticulation dès la température ambiante sont bien connues de l'homme de l'art et sont classées en 2 groupes distincts:

- les compositions mono-composantes (RTV-1), qui se présentent sous la forme d'une seule partie (ou composante) dont l'emballage est étanche à l'air, et
- les compositions bi-composantes (RTV-2) qui se présentent sous la forme de deux parties distinctes (d'où l'appellation « bi-composantes ») et dont l'emballage contenant le catalyseur est étanche à l'air.

Les emballages étanches à l'air ont pour but d'éviter la mise en contact des compositions silicones contenant le catalyseur avec l'humidité de l'air lors du stockage avant utilisation.

Lors du durcissement (par polymérisation et/ou réticulation) de ces compositions silicones, l'eau est apportée par l'humidité atmosphérique dans le cas des RTV-1. Dans le cas des RTV-2, les dicarboxylates de diméthyl étain sont couramment utilisés comme catalyseurs, mais ils nécessitent l'addition d'une quantité d'eau dans l'une des parties afin d'activer le catalyseur et permettre la réaction de polycondensation lorsque les contenus des deux parties sont mélangés à l'air ambiant de manière à former le réseau élastomérique qui se traduit par un durcissement de la composition.

Par exemple, les compositions silicones mono-composantes (RTV-1) utilisées comme mastics ou adhésifs réticulent à froid suivant un mécanisme faisant intervenir un certains nombres de réactions qui peuvent être successive ou simultanées:

a) une fonctionnalisation qui résulte de la mise en présence d'une huile silicone ayant des fonctions silanols avec un réticulant, parfois dénommés sous le terme anglo-saxon de « scavenger », tel qu'un composé silane de type $SiX_4$ (par exemple un silicate) ou un composé ayant la fonction suivante $-SiX_3$ avec X étant le plus souvent une fonction alcoxy, acyloxy, amino, amido, énoxy, aminoxy, cétiminoxy ou oxime, qui sont bien connues pour être réactives avec les fonctions silanols. Le produit résultant est dénommé le plus souvent par l'expression « huile fonctionnalisée ». Cette réaction peut être souhaitée directement lors de la préparation de la composition ou éventuellement comme pré-étape avant l'addition des autres composants de la composition. Dans cette pré-étape, il est courant d'utiliser un catalyseur de fonctionnalisation tel que par exemple la lithine (ou hydroxyde de lithium) ou la potasse afin de conférer à la composition mono-composante une bonne stabilité au stockage. Pour ce faire l'homme du métier pourra choisir des catalyseurs spécifiques de fonctionnalisation et ajustera la quantité des réactifs de manière à être en excès molaire de réticulant par rapport aux fonctions silanols à fonctionnaliser, et

b) une réticulation par l'intermédiaire d'une hydrolyse de l'huile fonctionnalisé généralement effectuée grâce à la vapeur d'eau qui diffuse dans le matériau à partir de la surface exposée à l'atmosphère, et d'une condensation entre les groupements silanols formés et d'autres fonctions réactives résiduelles.

Généralement, la cinétique des réactions de polycondensation est lente. Ces réactions sont donc catalysées par un catalyseur approprié. Comme catalyseurs, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité.

Quant aux compositions bicomposantes RTV-2, elles sont commercialisées et stockées sous la forme de deux composantes (ou parties), une première composante (ou partie) comprenant les polymères susceptible de polycondenser et la deuxième composante est étanche à l'air et contient le catalyseur et le plus souvent le réticulant. Les deux composantes (ou parties) sont mélangées lors de l'emploi et le mélange réticule sous la forme d'un élastomère relativement

dur lorsque la composition comprend des charges de renfort. Ces compositions à deux composantes sont bien connues et sont notamment décrites dans l'ouvrage de Walter Noll "Chemistry and Technology of Silicones" 1968, 2ème édition aux pages 395 à 398. Ces compositions comportent essentiellement 4 ingrédients différents:

- un polymère réactif tel qu'un $\alpha,\omega$-bis(hydroxydiméthylsilyl)-polydiméthylsiloxane,
- un agent de réticulation,
- un catalyseur de condensation, et
- éventuellement de l'eau, le plus souvent présent lorsqu'un dicarboxylates de dialkylétain est utilisé comme catalyseur (activation de ce dernier par la présence d'eau).

Le plus souvent, le catalyseur de condensation est à base d'un composé organique d'étain. En effet, de nombreux catalyseurs à base d'étain ont déjà été proposés comme catalyseur de réticulation de ces RTV-2. Les composés les plus utilisés sont les carboxylates d'alkylétain tels que le monooléate de tributyéltain ou les dicarboxylates de dialkylétain tels que le dilaurate de dibutylétain, le diacétate de dibutylétain ou le dilaurate de diméthylétain (voir l'ouvrage de Noll "Chemistry and Technology of silicones" page 337, Academic Press, 1968 - 2ème édition ou les brevets EP 147 323 ou EP 235 049).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Les catalyseurs à base de titane, également très employés dans les RTV-1, présentent cependant un inconvénient majeur: ils ont une cinétique plus lente que les catalyseurs à base d'étain. De plus, ces catalyseurs ne sont pas utilisables dans les RTV-2 du fait de problèmes de gélification.

D'autres catalyseurs sont parfois mentionnés comme les catalyseurs à base de zinc, de zirconium ou d'aluminium, mais ils n'ont connus qu'un faible développement industriel en raison de leur médiocre efficacité.

Pour un développement durable, il apparaît donc nécessaire de développer des catalyseurs non toxiques pour la réaction de polycondensation des organopolysiloxanes.

Un autre aspect important pour un catalyseur de la réaction de polycondensation des organopolysiloxanes est le temps de mise en oeuvre (« pot-life » ou « temps de travail »), c'est-à-dire le temps pendant lequel la composition peut être utilisée après mélange sans durcir. Ce temps doit être suffisamment long, pour permettre son utilisation mais suffisamment court pour obtenir un objet moulé manipulable au plus tard quelques minutes ou quelques heures après sa fabrication. Le catalyseur doit donc permettre d'obtenir un bon compromis entre le temps d'utilisation du mélange catalysé et le temps au bout duquel l'objet moulé est manipulable (ces temps dépendent de l'application visée comme par exemple le moulage ou la fabrication de joints). En outre le catalyseur doit conférer au mélange catalysé un temps d'étalement qui ne varie pas en fonction de la durée au stockage.

L'objectif essentiel de la présente invention est donc de trouver de nouveaux catalyseurs permettant aussi bien, à l'humidité de l'air, une réticulation en surface mais aussi une réticulation à coeur la plus complète possible lorsqu'ils sont utilisés dans des compositions monocomposant RTV-1.

Un autre objectif essentiel de la présente invention est de proposer un catalyseur utilisable à la fois dans la réticulation des compositions réticulables en élastomère et se présentant sous la forme de composition monocomposant (RTV-1) ou bi-composantes (RTV-2).

Un autre objectif essentiel de la présente invention est de proposer un système catalytique qui continue à répondre à la fois aux contraintes de conservation, de mise en oeuvre et de réticulation des deux types de compositions élastomères mono- et bi-composantes.

Ces objectifs, parmi d'autres, sont atteints par la présente invention qui concerne tout d'abord une composition comprenant:

- au moins un composé organosilicié **A** comprenant au moins deux groupements hydrolysables et condensables, identiques ou différents, ou au moins deux fonctions silanol ≡SiOH,
- au moins un agent de réticulation **B,**
- éventuellement au moins une charge **C,** et
- une quantité catalytiquement efficace d'au moins un catalyseur de polycondensation **M** qui est un complexe de zinc comprenant dans sa structure deux types de ligand: carboxylate et amine.

De manière préférentielle, le catalyseur de polycondensation **M** est un complexe de zinc comprenant dans sa structure au moins deux ligands carboxylate et au moins un ligand amine, et encore plus préférentiellement, le catalyseur de polycondensation **M** est un complexe de zinc comprenant dans sa structure:

- au moins deux ligands carboxylate, identiques ou différent, et
- un ou deux ligand(s) amine.

Il est entendu que le terme « complexe » inclue dans sa définition toute forme monomérique, oligomérique ou analogue dudit complexe de zinc selon l'invention.

Il est du mérite des inventeurs d'avoir trouvé, de manière tout à fait surprenante et inattendue, qu'il convient d'utiliser des complexes métalliques du zinc comprenant deux types de ligands spécifiques que sont les ligands carboxylates et amines pour atteindre des vitesses de réticulation bien plus efficace que les complexes de dicarboxylate de zinc qui ont pourtant des similitudes structurales.

Il est aussi du mérite des inventeurs d'avoir vaincu le préjugé technique qui voulait que, jusqu'alors certains complexes de métaux, comme le zinc par exemple, ne présentent qu'une médiocre activité dans la réaction de polycondensation d'organopolysiloxanes.

La définition des ligands est tirée de l'ouvrage « Chimie Organométallique » de Didier Astruc, publié en 2000 par EDP Sciences, Cf. notamment Chapitre 1, « Les complexes monométalliques », pages 31 et suivantes.

Le catalyseur selon l'invention peut être à l'état solide ou liquide. Il peut être incorporé seul ou dans un solvant approprié. Lorsqu'il est en solvant, une huile silicone ou tout autre solvant compatible comme des coupes pétrolières peut être additionnée, le solvant est ensuite évaporé de manière à transférer le catalyseur dans un milieu silicone. Le mélange obtenu peut servir alors de « base catalysante ».

Selon un mode de réalisation préféré, le(s) catalyseur(s) de polycondensation **M** est (sont) susceptible(s) d'être obtenu(s) :

a) en faisant réagir pour 1 mole d'au moins un dicarboxylate de zinc de formule [Zn(carboxylate)$_2$] ou d'un mélange de deux dicarboxylates de zinc distincts $\mathbf{X^1}$ mole d'amine ou d'un mélange d'amines éventuellement en présence d'un solvant, de manière à obtenir un produit de réaction comprenant :

- x mole d'un complexe de zinc **A** qui est un complexe [Zn(carboxylate)$_2$(amine)],
- y mole d'un complexe de zinc **B** qui est un complexe [Zn(carboxylate)$_2$(amine)$_2$],
- avec $x \geq 0$, $y \geq 0$,
- éventuellement $\mathbf{X^3}$ mole du dicarboxylate de zinc n'ayant pas réagi, et
- éventuellement $\mathbf{X^4}$ mole d'amine résiduelle n'ayant pas réagi, et

b) après éventuellement élimination du solvant et de l'aminé résiduelle, on récupère le(s) catalyseur(s) de polycondensation **M** sous la forme d'au moins un complexe de zinc **A,** d'au moins un complexe de zinc **B** ou d'un mélange de complexe de zinc **A** et de complexe de zinc **B,** avec éventuellement une quantité résiduelle de $\mathbf{X^3}$ mole du complexe [Zn(carboxylate)$_2$], et

- les symboles $\mathbf{X^1}$**,** $\mathbf{X^3}$ et $\mathbf{X^4}$ sont des nombres et la somme x+y+ $\mathbf{X^3}$=1

L'élimination du solvant ou de l'amine résiduelle se fera par toute technique connue (distillation, filtration,...). Il est connu que des structures [Zn(carboxylate)$_2$(amine)] ou [Zn(carboxylate)$_2$(amine)$_2$] peuvent aussi former des dimères, trimère ou tétramère. Par conséquent la définition du catalyseur selon l'invention englobe aussi les formes dimères, trimère ou tétramère dudit catalyseur selon l'invention.

Suivant le type de catalyseur de polycondensation **M** souhaité (complexe de dicarboxylate de zinc mono ou diaminé, ou un mélange de ces espèces), le nombre de mole d'amine $\mathbf{X^1}$ sera ajusté en conséquence :

- $\mathbf{X^1} \geq 2$ équivalents molaire par rapport au zinc pour obtenir majoritairement un complexe dicarboxylate diamine de zinc **B,**
- $1 \leq \mathbf{X^1} < 2$ équivalents molaire par rapport au zinc pour obtenir majoritairement un mélange de complexe dicarboxylate diamine de zinc **B** et dicarboxylate monoamine de zinc **A,**
- $\mathbf{X^1} < \mathbf{1}$ équivalent molaire par rapport au zinc pour obtenir majoritairement un mélange de complexe dicarboxylate monoamine de zinc **A** et de complexe [Zn(carboxylate)$_2$] n'ayant pas réagi.

Les complexes de type dicarboxylate de zinc sont pour la plupart disponibles commercialement ou alors peuvent être préparés aisément par exemple par ajout de chlorure de zinc en solution méthanolique à une solution de carboxylate de sodium dans un solvant tel qu'un mélange toluène-méthanol. Après distillation du méthanol, filtration du chlorure de sodium formé, et évaporation du toluène, on obtient le dicarboxylate de zinc correspondant.

Une autre méthode connue consiste à verser un carboxylate de sodium dans une solution de nitrate de zinc tout en maintenant le pH de la solution voisin de 5 et éventuellement à une température voisine de 40°C. Le précipité obtenu est ensuite filtré, éventuellement lavé à l'eau distillée puis séché de manière à obtenir le dicarboxylate de zinc correspondant.

Pour préparer des complexes dicarboxylate de zinc mixte, c'est-à-dire avec deux types distincts de ligands

carboxylates, on peut ajouter simultanément deux types de carboxylates de sodium en proportion équimolaire ou non au nitrate de zinc en solution aqueuse. Le produit de la réaction est un dicarboxylate de zinc mixte éventuellement sous forme hydratée.

Selon un mode de réalisation préféré, l'invention concerne une composition comprenant:

- au moins un composé organosilicié **A** comprenant au moins deux groupements hydrolysables et condensables, identiques ou différents, ou au moins deux fonctions silanol ≡SiOH,
- au moins un agent de réticulation **B,**
- éventuellement au moins une charge **C,** et
- une quantité catalytiquement efficace d'au moins un catalyseur de polycondensation **M** qui est un complexe de formule **(1)** suivante:

$$[Zn(C^1)_{n'}(C^2)_{n''}(L^1)_{y'}(L^2)_{y''}(X)_{x'}]_{z'}.(H_2O)_{x''} \qquad \textbf{(1)}$$

dans laquelle:

- les symboles $C^1$ et $C^2$ sont des ligands, identiques ou différents, choisis dans le groupe des carboxylates,
- les symboles n' et n" représentent le nombre de ligands carboxylates et sont des nombres entiers égaux à 0, 1 ou 2 avec la condition que la somme n'+n"= 2,
- les symboles $L^1$ et $L^2$ sont des ligands, identiques ou différents, choisis dans le groupe des amines,
- les symboles y' et y" représentent le nombre de ligands amines et sont des nombres entiers égaux à 0, 1 ou 2 avec la condition que la somme y'+y"= 1 ou 2,
- le symbole X est un ligand différent de $C^1$, $C^2$, $L^1$ et $L^2$ et de préférence un ligand neutre autre qu'une amine et encore plus préférentiellement X est une molécule $H_20$,
- le symbole x'≥0, et de préférence x' = 0, 1, 2, 3 ou 4,
- le symbole x"≥0, et de préférence x"= 0, 1, 2, 3 ou 4, et
- le symbole z' est un nombre entier supérieur ou égal à 1, et de préférence z'=1 ou 2.

Le ligand X est de préférence un ligand neutre autre qu'une amine et dont la structure importe peu. L'homme du métier utilisera tout type de précurseur lors de la préparation du catalyseur **M** selon l'invention de manière à ce que ce ligand neutre n'interfère pas avec la réactivité du catalyseur. Un exemple de ligand neutre est par exemple une molécule d'eau.

Selon un mode de réalisation préféré, le catalyseur de polycondensation **M** est un complexe de formule **(2)** suivante:

$$[Zn(C^1)_{n'}(C^2)_{n''}(L^1)_{y'}(L^2)_{y''}]_{z'} \qquad \textbf{(2)}$$

dans laquelle:

- les symboles $C^1$ et $C^2$ sont des ligands, identiques ou différents, choisis dans le groupe des carboxylates,
- les symboles n' et n" représentent le nombre de ligand carboxylate et sont des nombres entier égaux à 0, 1 ou 2 avec la condition que la somme n'+n"=2,
- les symboles $L^1$ et $L^2$ sont des ligands, identiques ou différents, choisis dans le groupe des amines,
- les symboles y' et y" représentent le nombre de ligands amines et sont des nombres entiers égaux à 0, 1 ou 2 avec la condition que la somme y'+y"= 1 ou 2, et
- le symbole z' est un nombre entier supérieur ou égal à 1, et de préférence z'=1 ou 2 et encore plus préférentiellement z'=1.

Selon un autre mode de réalisation préféré, le catalyseur de polycondensation **M** est un complexe de formule **(3)** suivante:

$$[Zn(C^1)_2(L^1)_{y'}]_{z'} \qquad \textbf{(3)}$$

dans laquelle:

- le symbole $C^1$ est un ligand choisi dans le groupe des carboxylates,
- le symbole $L^1$ set un ligand choisi dans le groupe des amines,
- le symbole y' est un nombre égal à 1 ou 2, et

- le symbole z' est un nombre entier supérieur ou égal à 1, et de préférence le symbole z'=1, 2, 3 ou 4, et encore plus préférentiellement z'=1 ou 2.

Des exemples d'amines utiles comme ligands $L^1$ ou $L^2$ sont par exemple les amidines suivantes: N'-cyclohexyl-N,N-diméthylformamidine,N'-méthyl-N,N-di-n-butylacétamidine, N'-octadécyll-N,N-diméthylformamidine, N'-cyclohexyl-N,N-diméthylvaléramidine, 1-méthyl-2-cyclohexyliminopyrrolidine,3-butyl-3,4,5,6-tétrahydropyrimidine,N-(hexyliminométhyl)morpholine,N-([alpha]-(décylimino éthyl)éthyl) pyrrolidine,N'-décyl-N,N-dimethylformamidine, N'-dodécyl-N,N-diméthylformamidine, N'-cyclohexyl-N,N-acétamidine.

D'autres amines utiles comme ligands sont par exemple des dérivés hétérocycliques de type imidazoline, imidazole, tétrahydropyrimidine, dihydropyrimidine, pyridine, pyrrolidine, pipéridine ou pyrimidine. On peut aussi utiliser des amidines acycliques ou des guanidines.

Des exemples de ligands imidazoles sont les composés suivants: N-(2-hydroxyéthyl)imidazole, N-(3-aminopropyl)imidazole,4-(hydroxyméthyl)imidazole,1-(tert-butoxycarbonyl)imidazole, 4-carboxyimidazole,1-butylimidazole, 4-formyl imidazole,1-(éthoxycarbonyl)imidazole, 2-méthyl imidazole, 1-triméthylsilylimidazole, 1(p-toluenesulfonyl)imidazole,1,1'-carbonylbisimidazole et 1-(2-cyanoéthyl)-2-éthyl-4-méthylimidazole.

Des exemples de ligands imidazolines sont les composés suivants: 1H-imidazole-1-éthanol, 2-(8Z)-8-heptadécényl-4,5-dihydro, 1H-imidazole-1-éthanol, 1H-imidazole-1-éthanol, 1H-imidazole, 4,5-dihydro,-2-(9Z)-9-octadécényl,oleyl hydroxyéthyl imidazoline, 1H-imidazole-1-éthanol,4,5-dihydro-2-undecyl-, 1H-imidazole-1-éthanol, 2-heptadécyl-4,5-dihydro et 1H-imidazole-1-éthanol, 2-nonyl-4,5-dihydro.

De préférence, le ligand de type amine $L^1$ ou $L^2$ est choisi parmi le groupe constitué par: les monoamines primaires de type alkylamine ayant au total de 1 à 40 atomes de carbone pour le radical alkyle, les monoamines secondaires de type dialkylamine ayant au total de 2 à 40 atomes de carbone pour les radicaux alkyles, les monoamines tertiaires de type trialkylamine ayant au total de 3 à 60 atomes de carbone pour les radicaux alkyles, les diamines alkylées ayant au total de 1 à 40 atomes de carbones pour les radicaux alkyles et les silanes aminés, et encore plus préférentiellement les ligands $L^1$ et $L^2$ sont choisis parmi le groupe constitué par les monoamines secondaires de type dialkylamine ayant au total de 2 à 20 atomes de carbone et les monoamines primaires de type alkylamine ayant au total de 1 à 40 atomes de carbone pour le radical alkyle.

Des ligands $L^1$ ou $L^2$ utiles selon l'invention sont les amines choisies parmi le groupe constitué par les amines: N,N-diméthyléthylènediamine, N,N'-diméthyléthylènediamine, N,N,N'-triméthyléthylènediamine, N,N'-diisopropyléthylènediamine, n-butylamine, n-propylamine, n-heptylamine, n-octylamine, n-nonylamime, tert-butylamine, isopropylamine, 2-éthylhexylamine, décylamine, dodécylamine linéaires ou ramifiées, N-méthyl-N-butylamine, N,N-dipropylamine, N,N-diisopropylamine, N-éthyl-N-butylamine, N,N-dibutylamine, N,N-diméthyl-N-butylamine, di(n-octyl)amine, N-n-propyléthylènediamine, , N,N,N',N'-tétraméthyléthylènediamine, 3-aminopropyltriméthoxysilane et 3 -aminopropylméthyldiéthoxysilane.

Une autre liste de ligands utiles selon l'invention est la liste suivante d'amines :

- Amines primaires : N-Propylamine, N-Isopropylamine, N-Butylamine, N-Benzylamine, N-Hexylamine, N-cyclohexylamine, N-n-octylamine, N-(2-éthylhexyl)amine, N-(2-phényléthyl)amine, N-(3-méthoxypropyl)amine, N-Nonylamine, N-isononylamine,N-décylamine, N-dodécylamine, éthylènediamine et 1,3-diaminopropane.
- Amines secondaires: N,N-Dipropylamine, N,N-Diisopropylamine, N,N-Dibutylamine, N,N-Dihexylamine, N,N-Dicyclohexylamine, N,N-Di(2-méthoxyéthyl)amine, N,N-Dioctylamine, N,N-Di(2-éthylhexyl)amine, N,N-Diisononylamine, N,N-Di(tridécyl)amine, Morpholine, Piperidine, Pyrrolidine, 2,2,6,6-tétraméthylpipéridine, Pipérazine, N,N'-diméthyléthylènediamine, N,N'-diéthyléethylènediamine et N,N'-diisopropyléthylènediamine.

Les ligands carboxylates $C^1$ et $C^2$ utiles selon l'invention sont par exemples:

- des anions dérivés des acides carboxyliques aliphatiques tels que les anions:

  méthanoate ou formiate $[H-COO]^-$, éthanoate ou acétate $[CH_3-COO]^-$, propanoate ou propionate $[CH_3CH_2-COO]^-$, butanoate ou butyrate $[CH_3-(CH_2)_2-COO]^-$, pentanoate ou valerate $[CH_3-(CH_2)_3-COO]^-$, hexanoate ou caproate $[CH_3-(CH_2)_4-COO]^-$, heptanoate $[CH_3-(CH_2)_5-COO]^-$, octanoate $[CH_3-(CH_2)_6-COO]^-$, 2-éthylhexanoate $[CH_3-(CH_2)_4-CH(C_2H_5)-COO]^-$, nonanoate $[CH_3-(CH_2)_7-COO]^-$, décanoate $[CH_3-(CH_2)_8-COO]^-$, undécanoate $[CH_3-(CH_2)_9-COO]^-$, dodécanoate ou laurate $[CH_3-(CH_2)_{10}-COO]^-$, tridécanoate $[CH_3-(CH_2)_{11}-COO]^-$, tétradécanoate ou myristate $[CH_3-(CH_2)_{12}-COO]^-$, pentadécanoate $[CH_3-(CH_2)_{13}-COO]^-$, hexadécanoate ou palmitate $[CH_3-(CH_2)_{14}-COO]^-$, heptadécanoate $[CH_3-(CH_2)_{15}-COO]^-$, octadécanoate ou stéarate $[CH_3-(CH_2)_{16}-COO]^-$, nonadécanoate $[CH_3-(CH_2)_{17}-COO]^-$, éicosanoate $[CH_3-(CH_2)_{18}-COO]^-$, hénéicosanoate $[CH_3-(CH_2)_{19}-COO]^-$, docosanoate ou béhénate $[CH_3-(CH_2)_{20}-COO]^-$, tricosanoate $[CH_3-(CH_2)_{21}-COO]^-$, tétracosanoate ou lignocérate $[CH_3-(CH_2)_{22}-COO]^-$, pentacosanoate $[CH_3-(CH_2)_{23}-COO]^-$

, hexacosanoate $[CH_3\text{-}(CH_2)_{24}\text{-}COO]^-$, acide heptacosanoate $[CH_3\text{-}(CH_2)_{25}\text{-}COO]^-$, octacosanoate $[CH_3\text{-}(CH_2)_{26}\text{-}COO]^-$, nonacosanoate $[CH_3\text{-}(CH_2)_{27}\text{-}COO]^-$, triacontanoate $[CH_3\text{-}(CH_2)_{28}\text{-}COO]^-$, hentriacontanoate $[CH_3\text{-}(CH_2)_{29}\text{-}COO]^-$, dotriacontanoate $[CH_3\text{-}(CH_2)_{30}\text{-}COO]^-$, palmitoléate $[CH_3\text{-}(CH_2)_5\text{-}CH\text{=}CH\text{-}(CH_2)_7\text{-}COO]^-$, oléate $[CH_3(CH_2)_7CH\text{=}CH(CH_2)_7COO]^-$, linoléate $[CH_3\text{-}(CH_2)_4\text{-}(CH\text{=}CHCH_2)_2\text{-}(CH_2)_6\text{-}COO]^-$, linolénate $[CH_3\text{-}CH_2\text{-}(CH\text{=}CHCH_2)_3\text{-}(CH_2)_6\text{-}COO]^-$, arachidonate $[CH_3\text{-}(CH_2)_4\text{-}(CH\text{=}CHCH_2)_4\text{-}(CH_2)_2\text{-}COO]^-$,

- les isomères de structure en $C_{10}$ suivants, pris seuls ou en mélange (néodécanoate): 7,7-diméthyloctanoate $[(CH_3)_3C\text{-}(CH_2)_5\text{-}COO]^-$, 2,2-diméthyloctanoate $[CH_3\text{-}(CH_2)_5\text{-}C(CH_3)_2\text{-}COO]^-$, 2,2,3,5-tétraméthylhexanoate $[(CH_3)_2CH\text{-}CH_2\text{-}CH(CH_3)\text{-}C(CH_3)_2\text{-}COO]^-$, 2,5-diméthyl-2-éthylhexanoate$[(CH_3)_2CH\text{-}(CH_2)_2\text{-}C(CH_3)(C_2H_5)\text{-}COO]^-$, 2,2-diéthylhexanoate $[CH_3\text{-}(CH_2)_3\text{-}C(C_2H_5)_2\text{-}COO]^-$, 2,4-diméthyl-2-isopropylpentanoate $[(CH_3)_2CH\text{-}CH_2\text{-}C(CH_3)(i\text{-}propyl)\text{-}COO]^-$,

- les carboxylates correspondant de l'acide Versatic™ 10 (vendu par la société Momentive) de formule brute $[C_{10}H_{19}O_2]^-$ et de formule linéaire $[(R^1)(R^2)C(CH_3)\text{-}COO]^-$ avec les symboles $R^1$ et $R^2$ qui sont des alkyles,

- ou des anions dérivés des acides carboxyliques aromatiques tels que les anions de type benzoate, phénylacétate, phénylpropionate, phénylbutyrate ou naphténate.

L'expression "aliphatique" signifie qu'il s'agit de composé organique carboné acyclique ou cyclique, linéaire ou branché, saturé ou insaturé, à l'exclusion des composés aromatiques.

Il est particulièrement avantageux de choisir les ligands carboxylates de formule brute $[C_{10}H_{19}O_2]^-$ et encore plus préférentiellement il est avantageux de choisir le néo-décanoate comme ligand de type carboxylate.

Selon un autre mode de réalisation préféré, les symboles $C^1$ et $C^2$ sont des ligands carboxylates, identiques ou différents, choisis dans le groupe des anions de formule brute $[C_nH_{2n-1}O_2]^-$, formule dans laquelle le symbole n est un nombre entier de 1 à 40, et de préférence de 1 à 32 et encore plus préférentiellement de 2 à 30.

Selon un mode de réalisation préféré, le ligand de type carboxylate $C^1$ ou $C^2$ est choisi parmi le groupe constitué par les carboxylates de formule brute $[C_{10}H_{19}O_2]^-$.

Selon un autre mode de réalisation préféré, le catalyseur de polycondensation **M** est un complexe de formule **(3')** suivante:

$$[Zn(C^1)_2(L^1)_{y'}]_{z'} \qquad \textbf{(3')}$$

dans laquelle:

- le symbole $C^1$ est un ligand néodécanoate, naphténate ou un ligand 2-éthylhexanoate,
- le symbole $L^1$ est un ligand choisi dans le groupe constitué par les composés: N,N-diméthyléthylènediamine, N,N'-diméthyléthylènediamine, N,N,N'-triméthyléthylènediamine, N,N'-diisopropyléthylènediamine, n-butylamine, n-propylamine, n-heptylamine, n-octylamine, n-nonylamime, tert-butylamine, isopropylamine, 2-éthylhexylamine, décylamine, dodécylamine linéaires ou ramifiées, N-méthyl-N-butylamine, N,N-dipropylamine, N,N- diisopropylamine, N-éthyl-N-butylamine, N,N-dibutylamine, N,N-diméthyl-N-butylamine, di(n-octyl)amine, N-n-propyléthylènediamine, N,N'-diméthyléthylènediamine, N,N,N',N'-tétraméthyléthylènediamine, 3-aminopropyltriméthoxysilane et 3-aminopropylméthyldiéthoxysilane.
- le symbole y' est un nombre entier égal à 1 ou 2, et
- le symbole z'=1, 2, 3 ou 4 et de préférence z'=1 ou 2.

Un catalyseur de polycondensation **M** particulièrement avantageux selon l'invention est un complexe choisi parmi le groupe constitué par les complexes suivants :

- $[Zn(naphténate)_2(bis(2\text{-}éthylhexyl)amine)]$,
- $[Zn(naphténate)_2(bis(2\text{-}éthylhexyl)amine)_2]$,
- $[Zn(naphténate)_2(diisononylamine)]$,
- $[Zn(naphténate)_2(diisononylamine)_2]$,
- $[Zn(naphténate)_2(di(n\text{-}octyl)amine)]$,
- $[Zn(naphténate)_2(di(n\text{-}octyl)amine)_2]$,
- $[Zn(naphténate)_2(n\text{-}octylamine)]$,
- $[Zn(naphténate)_2(n\text{-}octylamine)_2]$,
- $[Zn(naphténate)_2(N,N\text{-}dibutylamine)]$,

- [Zn(naphténate)$_2$(N,N-dibutylamine)$_2$],
- [Zn(naphténate)$_2$(N,N-diméthyl-N-butylamine)$_2$],
- [Zn(naphténate)$_2$(N,N-diméthyl-N-butylamine)$_2$],
- [Zn(naphténate)$_2$(aminoéthyl-aminopropyltriméthoxysilane)],
- [Zn(naphténate)$_2$(aminoéthyl-aminopropyltriméthoxysilane)$_2$],
- [Zn(naphténate)$_2$(aminopropyltriéthoxysilane)],
- [Zn(naphténate)$_2$(aminopropyltriéthoxysilane)$_2$],
- [Zn(néodécanoate)$_2$(di(n-octyl)amine)] ;
- [Zn(néodécanoate)$_2$(di(n-octyl)amine)]$_2$],
- [Zn(néodécanoate)$_2$(n-octylamine)],
- [Zn(néodécanoate)$_2$(n-octylamine)$_2$],
- [Zn(néodécanoate)$_2$(N,N-dibutylamine)],
- [Zn(néodécanoate)$_2$(N,N-dibutylamine)$_2$],
- [Zn(néodécanoate)$_2$(3-aminopropyltriméthoxysilane)$_2$],
- [Zn(néodécanoate)$_2$(3-aminopropylméthyldiéthoxysilane)$_2$],
- [Zn(néodécanoate)$_2$(aminoéthyl-aminopropyltriméthoxysilane)],
- [Zn(néodécanoate)$_2$(aminoéthyl-aminopropyltriméthoxysilane)$_2$],
- [Zn(néodécanoate)$_2$(aminopropyltriéthoxysilane)],
- [Zn(néodécanoate)$_2$(aminopropyltriéthoxysilane)$_2$],
- [Zn(néodécanoate)$_2$ (bis(2-éthylhexyl)amine)],
- [Zn(néodécanoate)$_2$(bis(2-éthylhexyl)amine)$_2$],
- [Zn(néodécanoate)$_2$(diisononylamine)],
- [Zn(néodécanoate)$_2$(diisononylamine)$_2$],
- [Zn(2-éthylhexanoate)$_2$(N,N-dibutylamine)]
- [Zn(2-éthylhexanoate)$_2$(N,N-dibutylamine)$_2$],
- [Zn(2-éthylhexanoate)$_2$(n-octylamine)],
- [Zn(2-éthylhexanoate)$_2$(n-octylamine)$_2$],
- [Zn(2-éthylhexanoate)$_2$(bis(2-éthylhexyl)amine)],
- [Zn(2-éthythexanoate)$_2$(bis(2-éthylhexyl)amine)$_2$],
- [Zn(2-éthylhexanoate)$_2$(diisononylamine)],
- [Zn(2-éthylhexanoate)$_2$(diisononylamine)$_2$]et
- leurs mélanges.

De préférence, la quantité du catalyseur de polycondensation **M** selon l'invention est comprise entre 0,1 et 10 % en poids par rapport au poids total de la composition, de préférence entre 0,5 et 5 % en poids, que ce soit pour une préparation mono ou bi-composantes.

Le composés organosilicié **A** selon l'invention peut être un organosilane, un organosiloxane, un organopolysiloxane comprenant au moins deux groupements hydrolysables et condensables, ou au moins deux fonctions silanol ≡SiOH ou des mélanges de tels composés organosiliciés.

De préférence, le composé organosilicié **A** selon l'invention sera porteur d'au moins deux groupements choisis parmi le groupe constitué par les groupements de type: hydroxy, alcoxy, alcoxy-alkylène-oxy, amino, amido, acylamino, aminoxy, iminoxy, cétiminoxy, acyloxy et énoxy.

Selon un mode de réalisation, le composé organosilicié **A** est un polyorganosiloxane comprenant:

(i) au moins deux motifs siloxyles de formule **(4)** suivante:

$$R^1_a Z_b Si O_{\left(\frac{4-(a+b)}{2}\right)}$$

**(4)**

dans laquelle:

- les symboles $R^1$, identiques ou différents, représentent des radicaux hydrocarbonés monovalents en $C_1$ à $C_{30}$,
- les symboles Z, identiques ou différents, représentent chacun un groupement hydrolysable et condensable ou un groupement hydroxy et de préférence sont choisis parmi le groupe constitué par les groupements de type:

hydroxy, alcoxy, alcoxy-alkylène-oxy, amino, amido, acylamino, aminoxy, iminoxy, cétiminoxy, acyloxy et énoxy,
- a est égal à 0, 1 ou 2, b est égal à 1, 2 ou 3, la somme a + b est égale à 1, 2 ou 3, et éventuellement

(ii) un ou plusieurs motif(s) siloxyle(s) de formule **(5)** suivante :

$$R_c SiO_{\left(\frac{4-c}{2}\right)}$$

**(5)**

dans laquelle:

- les symboles R, identiques ou différents, représentent des radicaux hydrocarbonés monovalent en $C_1$ à $C_{30}$ éventuellement substitués par un ou plusieurs atomes d'halogène ou par des groupements : amino, éther, ester, époxy, mercapto, cyano ou (poly)glycol, et
- le symbole c est égal à 0, 1, 2 ou 3.

Un autre aspect important pour une composition durcissable par des réactions de condensation est le temps de mise en oeuvre (« pot-life » ou « temps de travail »), c'est-à-dire le temps pendant lequel la composition peut être utilisée après mélange sans durcir. Par exemple, dans une application de moulage, ce temps doit être suffisamment long, pour permettre son utilisation mais suffisamment court pour obtenir un objet moulé manipulable au plus tard quelques minutes ou quelques heures après sa fabrication. Le catalyseur doit donc permettre d'obtenir un bon compromis entre le temps d'utilisation du mélange catalysé et le temps au bout duquel l'objet moulé est manipulable (ces temps dépendent de l'application visée comme par exemple le moulage ou la fabrication de joints). En outre, les composants réactifs en présence du catalyseur doivent conférer au mélange catalysé un temps d'étalement qui ne varie pas en fonction de la durée au stockage.

Ainsi, lorsque le composé organosilicié **A** est un polyorganosiloxane porteur d'au moins deux groupements hydroxy (de type silanol ≡SiOH), il a été découvert de manière surprenante et inattendue que lorsqu'il est mis en oeuvre dans une composition selon l'invention qui comprend comme catalyseur un complexe de zinc ayant des ligands carboxylates et amines selon l'invention, il est alors possible d'augmenter ou de diminuer le « temps de travail » (ou « pot-life ») en faisant simplement varier la masse molaire du composé organosilicié **A** dans un intervalle spécifique. Ainsi en faisant varier la masses molaires moyennes en poids ($M_w$) du composé organosilicié **A** dans un intervalle de valeurs supérieures à au moins deux fois la masse molaire d'enchevêtrement $M_e$, il est alors possible de moduler le « temps de travail » (ou « pot-life ») et ceci sans détériorer les propriétés mécaniques (par exemple la dureté shore A) de l'élastomère obtenu après réticulation. Sans être tenu par la théorie, la formation de points d'enchevêtrement à partir d'une certaine longueur de chaînes macromoléculaires pour chaque type de polyorganosiloxane est donc possible à partir d'une certaine masse molaire d'enchevêtrement du polymère que l'on identitifie par le symbole « $M_e$ ». Ainsi, la « masse molaire critique » notée $M_c$ est définie comme étant égale à environ deux fois la masse molaire d'enchevêtrement $M_e$. Au-dessus de la masse molaire critique $M_c$, il a donc été possible de contrôler le « temps de travail » (ou « pot-life ») de la composition silicone avant réticulation.

A titre indicatif et suivant le type de groupement présent dans le polyorganosiloxane porteur d'au moins deux groupements hydroxy de type silanol ≡SiOH, la masse molaire d'enchevêtrement $M_e$ se situe entre 15000 et 30000 g/mole.

Ainsi un mode de réalisation avantageux consiste à mettre en oeuvre un composé organosilicé **A** qui est un polyorganosiloxane porteur d'au moins deux groupements hydroxy de type silanol ≡SiOH dont la masse molaire moyenne en poids $M_w$ est supérieure à au moins deux fois la masse molaire d'enchevêtrement $M_e$. Le contrôle, grace au choix de la masse molaire moyenne en poids $M_w$ du composé organosilicié **A,** de la présence ou non d'enchevêtrement des chaînes du polyorganosiloxane porteur d'au moins deux groupements hydroxy de type silanol ≡SiOH permet à la fois de contrôler :

- les propriétés mécaniques de l'élatomère obtenu <u>après réticulation</u> de la composition selon l'invention et notamment la dureté shore A, et
- le « temps de travail » pendant lequel la composition est manipulable <u>avant réticulation</u>.

Le contrôle de l'enchevêtrement des chaînes du polyorganosiloxane porteur d'au moins deux groupements hydroxy de type silanol ≡SiOH se fera en choisissant judicieusement la masse molaire moyenne en poids $M_w$ du polymère de manière à ce que sa masse molaire soit au moins deux fois supérieure à la masse molaire d'enchevêtrement, c'est-à-dire qu'elle sera supérieure à la masse molaire critique $M_c$ de ce polymère.

De préférence, le composé organosilicié **A** est un polyorganosiloxane de formule générale **(6)** :

$$Z_nR_{3-n}Si\text{-}O\text{-}(SiR_2\text{-}O)_x\text{-}SiR_{3-n}Z_n \qquad \textbf{(6)}$$

dans laquelle :

- les symboles Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy et énoxy,
- les symboles R, identiques ou différents, représentent des radicaux hydrocarbonés monovalent en $C_1$ à $C_{30}$ éventuellement substitués par un ou plusieurs atomes d'halogène ou par des groupements : amino, éther, ester, époxy, mercapto ou cyano,
- le symbole n est égal à 1, 2 ou 3, de préférence égal à 2 ou 3 et lorsque Z est un groupe hydroxy alors n=1,
- le symbole x est compris entre 200 et 10000, de préférence entre 200 et 1000 et encore plus préférentiellement entre 250 et 600.

Dans les formules **(4), (5)** et **(6)** les symboles $R^1$ et R sont de préférence :

- Des radicaux alkyles ayant de 1 à 20 atomes de carbone éventuellement substitués par: un ou plusieurs groupes aryles ou cycloalkyles, par un ou plusieurs atomes d'halogène ou par des groupements : amino, éther, ester, époxy, mercapto, cyano ou (poly)glycol. On peut citer par exemple les radicaux : méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- des radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- des radicaux aryles et halogénoaryles mononucléaires ayant de 6 à 13 atomes de carbone tels que les radicaux : phényle, tolyle, xylyle, chlorophényle, dichlorophényle, trichlorophényle, ou
- des radicaux alcényles ayant de 2 à 8 atomes de carbone tels que les radicaux : vinyle, allyle et butène-2 yle.

La viscosité dynamique à 25°C du composé organosilicié **A** est généralement comprise entre 50 et 5 000 000 mPa.s à 25°C et de préférence entre 50 mPa.s et 1 000 000 mPa.s. Il est précisé que les valeurs des viscosités dans le présent mémoire sont les valeurs des viscosités dynamiques mesurées à 25°C à l'aide d'un viscosimètre BROOKFIELD.

Dans le cas particulier ou le composé organosilicié **A** est un polyorganosiloxane de formule générale **(6)** avec des symboles Z de type hydroxyle, alors le symbole n sera de préférence égal à 1. Dans ce cas, on préfère utiliser des polydiméthylsiloxanes ayant des extrémités diméthylhydroxysilyl qui sont généralement des huiles dont la viscosité dynamique à 25°C varie par exemple entre 100 mPa.s et 500000 mPa.s ou entre 500 mPa.s et 200000mPa.s à 25°C. Lorsque l'on souhaite contrôler la durée de vie du bain, par exemple dans une application de moulage, on fera en sorte que le choix du composé organosilicié **A** se fasse en fonction de la masse molaire moyenne en poids $M_w$ ($M_w$ supérieure à au moins deux fois la masse molaire d'enchevêtrement $M_e$). Pour une application de moulage et lorsque le composé est un polydiméthylsiloxane terminé par des fonctions silanols (≡SiOH), sa viscosité sera de préférence supérieure à 750 mPa.s, encore plus préférentiellement comprise entre 1000 mPa.s et 20000 mPa.s.

Lorsque le composé organosilicié **A** est un polyorganosiloxane, il est avantageux d'utiliser ceux dont au moins 60 % des radicaux R et $R^1$ (dans les formules 4 et 5) ou du radical R (dans la formule 6) sont des radicaux méthyles, les autres radicaux étant généralement des radicaux phényles et/ou vinyles.

Selon l'invention, les symboles Z représentent chacun un groupement hydroxy ou un groupement hydrolysable et condensable qui sont de préférence choisis parmi le groupe constitué par les groupements de type: alcoxy, alcoxy-alkylène-oxy, amino, amido, acylamino, aminoxy, iminoxy, cétiminoxy, acyloxy et énoxy.

Lorsque le composé organosilicé **A** présente des groupements Z hydrolysables et condensables selon l'invention et est un polyorganosiloxane, on le décrit le plus souvent comme un polymère fonctionnalisé et correspond à une forme stable en l'absence d'humidité qui peut être utilisé dans une composition mono-composante et être ainsi conditionnée en cartouches hermétiquement fermées, qui seront ouvertes par l'opérateur lors de l'utilisation pour former après durcissement un élastomère durcit. Lorsque le groupement organosilicié **A** présente des groupements Z de type hydroxy, on peut alors les fonctionnaliser in-situ dans les compostions mono-composantes, via un catalyseur de fonctionnalisation tel que la lithine, de manière à pouvoir les stocker et les conditionner en cartouches hermétiquement fermées.

Comme exemple de groupements hydrolysables et condensables Z de type alcoxy, on peut citer les groupes

ayant de 1 à 8 atomes de carbone comme les groupes : méthoxy, éthoxy, n-propoxy, iso-propoxy, n-butoxy, isobutoxy, sec-butoxy, tert-butoxy, 2-méthoxyéthoxy, hexyloxy ou octyloxy.

Comme exemple de groupements hydrolysables et condensables Z de type alcoxy-alkylène-oxy, on peut citer le groupement méthoxy-éthylène-oxy.

Comme exemple de groupements hydrolysables et condensables Z de type amino, on peut citer les groupements: méthylamino, diméthylamino, éthylamino, diéthylamino, n-butylamino, sec-butylamino ou cyclohexylamino.

Comme exemple de groupements hydrolysables et condensables Z de type amido on peut citer le groupement N-méthyl-acétamido.

Comme exemple de groupements hydrolysables et condensables Z de type acylamino, on peut citer le groupement benzoyl-amino.

Comme exemple de groupements hydrolysables et condensables Z aminoxy, on peut citer les groupements: diméthylaminoxy, diéthylaminoxy, dioctylaminoxy ou diphénylaminoxy.

Comme exemple de groupements hydrolysables et condensables Z de type iminoxy et en particulier cétiminoxy, on peut citer les groupements dérivés des oximes suivantes: acétophénone-oxime, acétone-oxime, benzophénon-oxime, méthyl-éthyl-cétoxime, di-isopropylcétoxyme ou méthylisobutyl-cétoxime.

Comme exemple de groupements hydrolysables et condensables Z de type acyloxy, on peut citer le groupement acétoxy.

Comme exemple de groupements hydrolysables et condensables Z de type énoxy on peut citer le groupement 2-propénoxy.

L'agent de réticulation **B** est de préférence un composé de silicium dont chaque molécule comprend au moins trois groupements hydrolysables et condensables **Y** et ledit agent de réticulation **B** ayant la formule **(7)** suivante:

$$R'_{(4-a)}SiY_a \qquad \textbf{(7)}$$

formule dans laquelle :

- le symbole R' est un radical hydrocarboné monovalent comprenant de 1 à 30 atomes de carbone,
- le symbole Y est un groupement alcoxy, alcoxy-alkylène-oxy, amino, amido, acylamino, aminoxy, iminoxy, cétiminoxy, acyloxy et énoxy et de préférence Y est un groupement alcoxy, acyloxy, énoxy, cétiminoxy ou oxime,
- le symbole a = 3 ou 4.

Des exemples de groupements Y sont les mêmes que ceux cités ci-dessus lorsque le symbole Z est un groupement hydrolysables et condensables, c'est-à-dire différent d'un groupement hydroxyle.

Comme exemple d'agent de réticulation **B** on peut citer les silanes alcoxy de formule générale **(8)** suivante et les produits d'hydrolyse partielle de ce silane:

$$R^2_kSi(OR^3)_{(4-k)} \qquad \textbf{(8)}$$

- dans laquelle :
  - les symboles $R^2$, identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en $C_3$-$C_6$,
  - le symbole $R^3$ représente un groupe hydrocarboné aliphatique saturé ou insaturé, linéaire ou ramifié, un groupe carbocyclique, saturé ou insaturé et/ou aromatique, monocyclique ou polycyclique, et
  - k est égal à 0, 1 ou 2.

Comme exemple de radicaux alcoxyalkylène en $C_3$-$C_6$ on peut citer les radicaux suivants :

$CH_3OCH_2CH_2$-
$CH_3OCH_2CH(CH_3)$-
$CH_3OCH(CH_3)CH_2$-
$C_2H_5OCH_2CH_2CH_2$-

Le symbole $R^3$ représente de préférence un radical hydrocarboné en $C_1$-$C_{10}$ englobant:

- les radicaux alkyles en $C_1$-$C_{10}$ tels que les radicaux méthyle, éthyle, propyle, butyle, pentyle, éthyl-2 hexyle, octyle,

décyle,

- les radicaux : vinyle ou allyle, et
- les radicaux cycloalkyles en $C_5$-$C_8$ tels que les radicaux : phényle, tolyle et xylyle.

Ces agents de réticulation **B** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **B,** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **B** qui peuvent être utilisés, on cite plus particulièrement le polysilicate d'éthyle, le polysilicate de n-propyle et les silanes suivants: le propyltriméthoxysilane, le méthyltriméthoxysilane, l'éthyltriméthoxysilane, le vinyltriéthoxysilane, le vinyltriméthoxysilane le méthyltriéthoxysilane, le propyltriéthoxysilane, le tétraméthoxysilane, le tétraéthoxysilane, le tétrapropoxysilane, le tétrabutoxysilane le 1,2-bis(triméthoxysilyl)éthane, le 1,2-bis(triéthoxysilyl)éthane, le tétraisopropoxysilane, le phényltriéthoxysilane, le méthyltris(méthyléthylcétoximo)silane, le 3-cyanopropyltriméthoxysilane, le 3-cyanopropyl-triéthoxysilane, 3-(glycidyloxy)propyltriéthoxysilane, le vinyltris(méthyléthylcétoximo)silane, le tétra-kis(méthyléthylcétoximo)silane, les acyloxysilanes tels que le vinyltriacétoxysilane, le méthyltriacétoxysilane ou l'éthyltriacétoxysilane ou encore ceux de formules suivantes :

$CH_3Si(OCH_3)_3$ ; $C_2H_5Si(OC_2H_{5\,3}$ ; $C_2H_5Si(OCH_3)_3$
$CH_2=CHSi(OCH_3)_3$; $CH_2=CHSi(OCH_2CH_2OCH_3)_3$
$C_6H_5Si(OCH_3)_3$; $[CH_3][OCH(CH_3)CH_2OCH_3]Si[OCH_3]_2$
$Si(OCH_{3\,4}$ ; $Si(OC_2H_5)_4$; $Si(OCH_2CH_2CH_3)_4$; $Si(OCH_2CH_2CH_2CH_3)_4$
$Si(OC_2H_4OCH_3)_4$; $CH_3Si(OC_2H_4OCH_3)_3$; $ClCH_2Si(OC_2H_5)_3$.

On utilise généralement de 0,1 à 60 parties en poids d'agent de réticulation **B** pour 100 parties en poids de composé organosilicié **A.** De préférence, on utilise de 1 à 15 parties en poids pour 100 parties en poids de composé organosilicié **A.**

Comme charges **C** on peut utiliser des charges minérales qui sont des produits très finement divisés dont le diamètre particulaire moyen est inférieur à 0,1 μm Les charges **C,** de préférence les silices renforçantes sont généralement utilisées à raison de 1 à 150 parties, de préférence de 8 à 100 parties, pour 100 parties de composé organosilicié **A.** Elles sont choisies parmi les silices de combustion et les silices de précipitation. Elles ont une surface spécifique, mesurée selon les méthodes BET et CTAB, d'au moins 50 $m^2/g$, de préférence supérieure à 70 $m^2/g$, une dimension moyenne des particules primaires inférieure à 80 nanomètres et une densité apparente inférieure à 200 g/litre. Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane.

En plus des silices renforçantes ou à la place de celles-ci, on peut ajouter des charges minérales semi-renforçantes ou de bourrage. Ces charges sont plus grossières et ont un diamètre particulaire moyen supérieur à 0,1 μm. Ces charges sont représentées plus spécialement par le quartz broyé, les argiles calcinées, les silices de diatomées, le carbonate de calcium, les oxydes de fer, de titane, de magnésium, d'aluminium, le sulfate de zinc et le sulfate de baryum. Elles sont généralement introduites à raison de 1 à 120 parties en poids pour 100 parties de composé organosilicié **A.** Ces charges minérales peuvent être utilisées telles quelles, c'est-à-dire non traitées ou traitées avec les composés organosiliciques mentionnés ci-avant dans le cas des silices renforçantes.

L'introduction des charges a pour but de conférer de bonnes caractéristiques rhéologiques pour la composition avant réticulation et mécaniques des élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les coktails d'oxyde décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

La composition selon l'invention peut aussi comprendre au moins un promoteur d'adhérence **E** tel que par

exemple les composés organosiliciques portant à la fois :

(1) un ou des groupes hydrolysables liés à l'atome de silicium, et
(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange:

- vinyltriméthoxysilane (VTMO),
- 3-glycidoxypropyl-triméthoxysilane (GLYMO),
- méthacryloxypropyltriméthoxysilane (MEMO),
- $[H_2N(CH_2)_3]Si(OCH_2CH_2CH_3)_3$,
- $[H_2N(CH_2)_3]Si(OCH_3)_3$
- $[H_2N(CH_2)_3]Si(OC_2H_5)_3$
- $[H_2N(CH_2)_4]Si(OCH_3)_3$
- $[H_2NCH_2CH(CH_3)CH_2CH_2]SiCH_3(OCH_3)_2$
- $[H_2NCH_2]Si(OCH_3)_3$
- $[n\text{-}C_4H_9\text{-}HN\text{-}CH_2]Si(OCH_3)_3$
- $[H_2N(CH_2)_2NH(CH_2)_3]Si(OCH_3)_3$
- $[H_2N(CH_2)_2NH(CH_2)_3]Si(OCH_2CH_2OCH_3)_3$
- $[CH_3NH(CH_2)_2NH(CH_2)_3]Si(OCH_3)_3$
- $[H_2N(NHCH_2CH_2)_2NH(CH_2)_3]Si(OCH_3)_3$
- 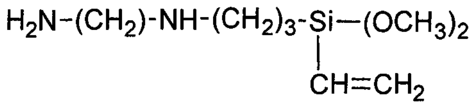

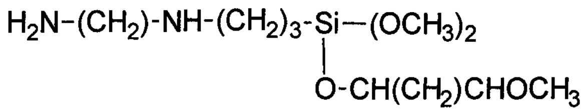

- ou des oligomères polyorganosiloxaniques contenant de tels groupes organiques à une teneur supérieure à 20%.

Outre les constituants principaux, des polymères polyorganosiloxanes linéaires non réactifs **(G)** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactifs **(G)** sont bien connus; ils comprennent plus spécialement: des polymères $\alpha,\omega$-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles $\alpha,\omega$-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties en poids, de préférence de 5 à 20 parties en poids pour 100 parties en poids du composé organosilicié **A.**

Les compositions selon l'invention peuvent en outre avantageusement comprendre au moins une résine silicone **(H).** Ces résines silicones sont des polymères organopolysiloxanes ramifiés bien connus et disponibles dans le commerce. Elles présentent, par molécule, au moins deux motifs différents choisis parmi ceux de formule $R'''_3SiO_{1/2}$ (motif M), $R'''_2SiO_{2/2}$ (motif D), $R'''SiO_{3/2}$ (motif T) et $SiO_{4/2}$ (motif Q) avec au moins un des motifs étant un motif T ou Q. Les radicaux R''' sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme exemples de radicaux R alkyles : les radicaux : méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g. Comme exemple de résines, on peut citer les résines MQ, les résines MDQ, les résines TD et les résines MDT.

D'autres agents auxiliaires et additifs usuels peuvent être incorporés à la composition selon l'invention; ceux-ci sont choisis en fonction des applications dans lesquelles sont utilisées lesdites compositions.

La composition selon l'invention peut comprendre les quantités suivantes :

- pour 100 parties en poids d'au moins un composé organosilicié **A** comprenant au moins deux groupements hydrolysables et condensables, identiques ou différent, ou au moins deux fonctions silanols ≡SiOH,
- de 0,1 à 60 parties en poids, de préférence de 1 à 15 parties en poids d'au moins un agent de réticulation **B,**
- de 0 à 150 parties en poids d'au moins une charge **C,**
- de 0 à 20 parties en poids d'au moins un promoteur d'adhérence **E,**
- de 0 à 150 parties en poids d'au moins un polymère polyorganosiloxane linéaires non réactifs **G,**
- de 0 à 50 parties en poids d'au moins une résine silicone **H,** et
- une quantité catalytiquement efficace d'au moins un catalyseur de polycondensation **M** selon l'invention.

Selon une variante de l'invention, la composition selon l'invention ne contient pas de catalyseur ayant dans sa structure au moins un atome d'étain.

Selon une autre variante de l'invention, le catalyseur de polycondensation **M** est le seul catalyseur de polycondensation présent dans ladite composition qui peut éventuellement contenir au moins un catalyseur de fonctionnalisation.

Un autre objet de l'invention concerne une composition bi-composante RTV-2, précurseur de la composition selon l'invention et telle que décrite ci-dessus, se présentant en deux emballages distincts **P1** et **P2** caractérisé en ce que :

- l'emballage **P1** qui est étanche à l'air et comprend:
  - une quantité catalytiquement efficace d'au moins un catalyseur de polycondensation **M** tel que défini ci-dessus, et
  - au moins un agent de réticulation **B,** et
- l'emballage **P2** ne contient pas ledit catalyseur de polycondensation **M** et ledit agent de réticulation **B** et comprend :
  - pour 100 parties en poids d'au moins un composé organosilicié **A** tel que défini ci-dessus, et
  - de 0 à 10 partie(s) en poids d'eau.

Selon un mode de réalisation avantageux, il a été découvert que dans les applications de moulage, et pour une composition bicomposante RTV-2 selon l'invention comprenant au moins un catalyseur selon l'invention associé à une huile polydiméthylsiloxane α,ω-dihydroxylée comme composé organosilicié **A,** il est alors possible de moduler la durée de vie de bain, après mélange des contenus P1 et P2 juste avant utilisation, en faisant simplement varier la viscosité de l'huile polydiméthylsiloxane α,ω-dihydroxylée choisie tout en choisissant une huile ayant une masse molaire $M_w$ supérieure à deux fois au moins à la masse molaire critique d'enchevêtrement $M_c$ ce polymère.

Ainsi, il a été découvert qu'en associant un catalyseur selon l'invention associé à au moins une huile polydiméthylsiloxane α,ω-dihydroxylée dont la viscosité est comprise entre 2000 mPa.s et 5000 mPa.s, et de préférence entre 3000 et 4000 mPa.s, il est possible alors d'augmenter le temps de travail lorsque les partie P1 et P2 sont réunies juste avant une utilisation dans une application moulage et ceci sans détériorer les propriétés de dureté lorsque la composition est durcie après réticulation (dureté Shore A, DSA à 24h et à 4 jours). Ainsi, selon un mode de réalisation préféré, l'invention concerne une composition bi-composante RTV-2 pour application moulage, précurseur de la composition selon l'inventiuon et telle que définie ci-dessus, se présentant en deux emballages distincts **P1** étanche à l'air et **P2** caractérisé en ce que :

- l'emballage **P1** comprend:
  - une quantité catalytiquement efficace d'au moins un catalyseur de polycondensation **M** selon l'invention et tel que défini ci-dessus, et
  - au moins un agent de réticulation **B** et de préférence tel que défini ci-dessus, et
- l'emballage **P2** ne contient pas ledit catalyseur de polycondensation **M** et ledit agent de réticulation **B** et comprend :
  - pour 100 parties en poids d'au moins un composé organosilicié **A** qui est un α,ω-di(diméthylhydroxysilyl)-polydiméthylsiloxane dont la viscosité dynamique à 25°C est comprise entre 2000 mPa.s et 5000 mPa.s et de préférence entre 3000 mPa.s et 4000 mPa., et
  - de 0 à 10 partie(s) en poids d'eau.

Un des avantages de ces nouvelles compositions RTV-2 selon l'invention par rapport aux RTV-2 classiques

de polycondensation utilisant des catalyseurs de dicarboxylate de dialkyl étain est qu'il n'est plus nécessaire d'ajouter de l'eau dans la partie **P2** car le catalyseur selon l'invention n'a pas besoin d'être activé simplifiant ainsi la formulation.

Un autre objet de l'invention concerne une composition mono-composante RTV-1 se présentant en un seul emballage **P** étanche à l'air et comprenant:

a) au moins un composé organosilicié **A** comprenant au moins deux groupements hydrolysables et condensables, identiques ou différent, ou au moins deux fonctions silanol ≡SiOH,
b) au moins un agent de réticulation **B,** et
c) une quantité catalytiquement efficace d'au moins un catalyseur de polycondensation **M,** et
d) éventuellement au moins une charge **C.**

Pour la composition mono-composante RTV-1 ou bi-composante RTV-2, d'autres composants peuvent être présent tels que: le promoteur d'adhérence **E,** le polymère polyorganosiloxane linéaires non réactifs **G,** la résine silicone **H** et les autres additifs tels que décrit dans le présent mémoire.

Une composition bi-composante RTV-2 se présente en deux emballages distincts **P1** qui contient le catalyseur et est étanche à l'air et **P2.** Elles sont conditionnées après incorporation du catalyseur en deux fractions séparées, l'une des fractions pouvant ne renfermer par exemple que le catalyseur selon l'invention ou un mélange avec l'agent réticulant. La fabrication des compositions bi-composantes RTV-2 conformes à l'invention s'effectue également par mélange des divers constituants dans des appareils appropriés. Des compositions bi-composantes RTV-2 sont décrites en détail par exemple dans les brevets EP 118 325, EP 117 772, EP 10 478, EP 50 358, EP 184 966, US 3 801 572 et US 3 888 815, cités comme référence.

Une composition mono-composante RTV-1 se présente en un seul emballage **P** étanche à l'air et stable au stockage en l'absence d'humidité, durcissable en présence d'humidité, en particulier d'humidité apportée par l'air ambiant ou par de l'eau générée au sein de la base lors de son emploi. Pour fabriquer les compositions conformes à l'invention, il est préférable dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités. Tous ces ingrédients peuvent être chargés dans l'appareillage selon un ordre quelconque d'introduction. Ainsi il est possible de mélanger tout d'abord le composé organosilicié **A** et les charges **C** et d'ajouter ensuite à l'empâtage obtenu l'agent de réticulation **B,** et éventuellement les autres composants lorsqu'ils sont présents et enfin le catalyseur de polycondensation **M** selon l'invention. Il est également possible de mélanger le composé organosilicié **A,** l'agent de réticulation **B,** la charge **C** et éventuellement les autres composants et d'ajouter ultérieurement le catalyseur de polycondensation **M** selon l'invention. Au cours de ces opérations, les mélanges peuvent être chauffés à une température de 50° à 180°C sous la pression atmosphérique ou sous une pression réduite afin de favoriser le départ de matières volatiles. Les compositions mono-composante RTV-1, conformes à l'invention, sont utilisées telle quelle, c'est-à-dire non diluée, ou sous forme de dispersions dans des diluants, et est stable au stockage en l'absence d'humidité ou d'eau et durcissent dès les basses températures (après départ des solvants dans le cas des dispersions) en présence d'eau pour former des élastomères. Des compositions monocomposantes RTV-1 sont décrites en détail par exemple dans les brevets EP 141 685, EP 147 323, EP 102 268, EP 21 859, FR 2 121 289 et FR 2 121 631, cités en référence.

Après le dépôt telles quelles des compositions selon l'invention préparées à partir d'une composition mono-composante RTV-1, sur des substrats solides en atmosphère humide, on constate qu'un processus de durcissement en élastomère se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Les compositions mono-composantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les compositions conformes à l'invention peuvent être employées pour de multiples applications comme le jointoiement et/ou le collage dans l'industrie du bâtiment, l'industrie du transport (exemples : automobile, aérospatiale, ferroviaire, maritime et aéronautique), l'assemblage des matériaux les plus divers (métaux, matières plastiques, caoutchoucs naturels et synthétiques, bois, cartons, polycarbonate, faïence, brique, céramique, verre, pierre, béton et éléments

de maçonnerie), l'isolation de conducteurs électriques, l'enrobage de circuits électroniques et la préparation de moules servant à la fabrication d'objets en résines ou mousses synthétiques.

A ces bases mono-composantes peuvent être ajoutés des promoteurs d'adhérence **E** choisis par exemple parmi les composés organosiliciés portant à la fois, d'une part, des groupes organiques substitués par des radicaux choisis dans le groupe des radicaux amino, uréido, isocyanate, époxy, alkènyle, isocyanurate, hydentoile, guanidino et mercaptoester et, d'autre part des groupes hydrolysables, en général des groupes alcoxy liés aux atomes de silicium. Des exemples de tels agents d'adhérence sont décrits dans les brevets américains US 3 517 001, US 4 115 356, US 4 180 642, US 4 273 698, US 4 356 116 et dans les brevets européens EP 31 996 et EP 74 001.

Les compositions selon l'invention sont particulièrement utiles pour des applications de moulage, en particulier lorsqu'elles se présentent sous la forme de bi-composant RTV-2. Pour la mise en oeuvre des compositions selon l'invention dans cette application, les techniques de coulée ou d'application via une spatule, un pinceau ou par pulvérisation sont utiles.

Comme exemple de technique de moulage on peut citer :

- le « moulage bateau » qui est destiné à la fabrication des moules autoportants, en une ou plusieurs pièces, par simple coulée de la composition après mélange des deux parties du RTV-2 à l'état liquide sur le modèle initial. Ce procédé est préféré pour les formes relativement simples et sans contre dépouilles importantes ;
- le « moulage sous chape en une ou deux parties », et
- le « moulage par estampage » qui est préféré pour la prise d'empreinte de modèles inclinés, verticaux ou en surplomb, en général de grandes dimensions ou lorsqu'il est impossible de déplacer le modèle.

Un autre objet de l'invention concerne un élastomère obtenu :

- après avoir mélangé le contenu des emballages **P1** et **P2** de la composition bi-composante RTV-2 selon l'invention et telle que décrite ci-dessus et laissé durcir le mélange,
- après avoir mise en contact avec l'humidité de l'air le contenu de l'emballage **P** de la composition mono-composante RTV-1 selon l'invention et telle que décrite ci-dessus et laissé durcir ledit contenu, ou
- après avoir préparé la composition selon l'invention et telle que décrite ci-dessus et laissé durcir le mélange en présence d'eau ou d'humidité de l'air.

Un autre objet de l'invention concerne un concerne un procédé d'enduction de la composition selon l'invention et telle que définie ci-dessus sur un support souple S qui est en textile, en papier, en polychlorure de vinyle, en polyester, en polypropylène, en polyamide ; en polyéthylène ; en polyuréthanne ou en polyéthylène téréphtalate comprenant les étapes a), b) et c) suivantes :

a) on prépare une composition selon l'invention et telle que définie ci-dessus,
b) puis on dépose de manière continue ou discontinue ladite composition sur ledit support souple **S**, et
c) on laisse réticuler ladite composition silicone **X** en présence d'humidité apportée par l'air ambiant ou par addition préalable d'eau de manière à former un élastomère silicone.

L'enduction de compositions silicones selon l'invention sur des supports souples vise de nombreuses applications. Par exemple, lorsque le support souple est un textile, des propriétés d'hydrofugation sont visées ou lorsque le support est un papier ou un polymère de type PVC, PET... des propriétés d'anti-adhérence sont le plus souvent recherchées.

Ainsi, une fois appliquée sur un support, la composition silicone selon l'invention réticule grâce à l'humidité de l'air et/ou par la présence d'eau dans la composition pour former un revêtement solide en élastomère silicone. Dans ces compositions silicones liquides d'enduction, la phase silicone peut être diluée dans un solvant.

Selon une variante du procédé selon l'invention, la composition à l'étape a) est préparée après avoir mélangé le contenu des emballages **P1** et **P2** de la composition bi-composante RTV-2 selon l'invention et telle que tel que défini ci-dessus ou à partir du contenu de l'emballage **P** de la composition mono-composante RTV-1 selon l'invention et telle que tel que défini ci-dessus.

Les supports souples **S** revêtus d'un film silicone ou d'une couche silicone durcie par réticulation anti-adhérent sont choisis parmi le groupe constitué par les supports en textile, en papier, en polychlorure de vinyle, en polyester, en polypropylène, en polyamide ; en polyéthylène ; en polyuréthanne ou en polyéthylène téréphtalate.

On entend par textile au sens de l'invention, un terme générique englobant toutes les structures textiles. Les textiles peuvent être constitués par des fils, fibres, filaments et/ou autres matières. Ils comprennent notamment les étoffes souples, qu'elles soient tissées, collées, tricotées, tressées, en feutre, aiguilletées, cousues, ou réalisées par un autre mode de fabrication.

Ces textiles peuvent être ajourés, c'est à dire comprendre des espaces libres non constitués de textile. Pour que l'enduction de la composition silicone de l'invention soit efficace, il est préférable que la plus petite des dimensions de ces espaces libres soit inférieure à 5 mm, notamment inférieurs à 1 mm.

Selon l'invention, tout type de support souple **S** en textile peut être utilisé. A titre indicatif, on peut citer :

- les textiles naturels, tels que : les textiles d'origine végétale, comme le coton, le lin, le chanvre, la jute, la coco, les fibres cellulosique du papier ; et les textiles d'origine animale, comme la laine, les poils, le cuir et les soies ;
- les textiles artificiels, tels que : les textiles cellulosiques, comme la cellulose ou ses dérivés ; et les textiles protéiniques d'origine animale ou végétale ; et
- les textiles synthétiques, tels que le polyester, le polyamide, les alcools polymalliques, le chlorure de polyvinyle, le polyacrylonitrile, les polyoléfines, l'acrylonitrile, les copolymères (méth)acrylate-butadiène-styrène et le polyuréthane.

Les textiles synthétiques obtenus par polymérisation ou polycondensation peuvent notamment comprendre dans leur matrice différente types d'additifs, tels que des pigments, des délustrants, des matifiants, des catalyseurs, des stabilisants thermiques et/ou lumière, des agents anti-statiques, des ignifugeants, des agents antibactériens, antifongiques, et/ou anti-acariens.

Comme type de support souple en textile, on peut citer notamment les supports obtenus par entrecroisement rectiligne des fils ou tissus, les supports obtenus par entrelacement curviligne des fils ou tricots, les surfaces mixtilignes ou tulles, les supports non tissés et les supports composites. Parmi la multitude de supports textiles possibles utilisables dans le procédé de l'invention, on peut mentionner les feutres, les denims, les tissés jacquards, les aiguilletés, les cousus, les crochetés, les grenadines, les dentelles et dentelés, les damas, les voiles, les alpagas, les barathéas, les basins, les bouclés, les brocarts, les calicots, les velours, les canevas, les chiffons, les flockés, les encollés, les étamines, les tressés, les failles, les foulards, les gazes, les géotextiles, les jaspés, les matelassés, les touffetés, les organzas, les plissés, les rubans, et les toiles.

Le support souple **S** en textile utilisé dans le procédé de la présente invention peut être constitué d'un ou plusieurs textiles, identiques ou différents, assemblés par diverses manières. Le textile peut être mono- ou multicouche(s). Le support textile peut par exemple être constitué d'une structure multicouche pouvant être réalisé par différents moyens d'assemblage, tels que des moyens mécaniques comme la couture, le soudage, ou le collage par point ou continu.

Le support souple **S** en textile peut, outre le procédé d'enduction selon la présente invention, subir un ou plusieurs autres traitements subséquents, également appelés traitement de finition ou d'ennoblissement. Ces autres traitements peuvent être effectués avant, après et/ou pendant ledit procédé d'enduction de l'invention. Comme autres traitements subséquents, on peut notamment citer : la teinture, l'impression, le contre collage, l'enduction, l'assemblage avec d'autres matériaux ou surfaces textiles, le lavage, le dégraissage, le préformage ou le fixage.

Selon une disposition préférée de réalisation de l'invention, le support souple **S** en textile est une dentelle ou une bande élastique.

Les textiles ainsi obtenus, tels quels ou transformés en articles textiles, peuvent être utilisés dans de nombreuses applications, telles que, par exemple, dans le domaine de l'habillement, notamment la lingerie comme les dentelles de hauts de bas ou de soutien-gorge, et les articles d'hygiène, tels que des bandes de contention ou des pansements. Ces articles textiles peuvent être repositionnés à différents endroits du corps ou d'un vêtement par exemple grâce à l'adhérence apportée par l'élastomère silicone.

En pratique, le taux de dépôt de la composition selon l'invention sur le support souple S est compris entre 0,1 et 1 de préférence 0,3 et 0,5 g/$m^2$, ce qui correspond à des épaisseurs de l'ordre du micromètre.

Un autre objet de l'invention concerne l'utilisation d'un catalyseur de polycondensation **M** selon l'invention et tel que défini ci-dessus comme catalyseur de la réaction de polycondensation de composé de silicium comprenant au moins deux groupements hydrolysables et condensables, identiques ou différents, ou au moins deux fonctions silanols ≡SiOH.

Enfin le dernier objet de l'invention concerne les complexes de formule suivante :

- [Zn(naphténate)$_2$(bis(2-éthylhexyl)amine)],
- [Zn(naphténate)$_2$(bis(2-éthylhexyl)amine)$_2$],
- [Zn(naphténate)$_2$(diisononylamine)],
- [Zn(naphténate)$_2$(diisononylamine)$_2$],
- [Zn(naphténate)$_2$(di(n-octyl)amine)],
- [Zn(naphténate)$_2$(di(n-octyl)amine)$_2$],
- [Zn(naphténate)$_2$(n-octylamine)],
- [Zn(naphténate)$_2$(n-octylamine)$_2$],
- [Zn(naphténate)$_2$(N,N-dibutylamine)],

- [Zn(naphténate)$_2$(N,N-dibutylamine)$_2$],
- [Zn(naphténate)$_2$(N,N-diméthyl-N-butylamine)$_2$],
- [Zn(naphténate)$_2$(N,N-diméthyl-N-butylamine)$_2$],
- [Zn(néodécanoate)$_2$(di(n-octyl)amine)] ;
- [Zn(néodécanoate)$_2$(di(n-octyl)amine)]$_2$],
- [Zn(néodécanoate)$_2$(n-octylamine)],
- [Zn(néodécanoate)$_2$(n-octylamine)$_2$],
- [Zn(néodécanoate)$_2$(N,N-dibutylamine)],
- [Zn(néodécanoate)$_2$(N,N-dibutylamine)$_2$],
- [Zn(néodécanoate)$_2$(3-aminopropyltriméthoxysilane)$_2$],
- [Zn(néodécanoate)$_2$(3-aminopropylméthyldiéthoxysilane)$_2$],
- [Zn(néodécanoate)$_2$(bis(2-éthylhexyl)amine)],
- [Zn(néodécanoate)$_2$(bis(2-éthylhexyl)amine)$_2$],
- [Zn(néodécanoate)$_2$(diisononylamine)],
- [Zn(néodécanoate)$_2$(diisononylamine)$_2$],
- [Zn(2-éthylhexanoate)$_2$(N,N-dibutylamine)]
- [Zn(2-éthylhexanoate)$_2$(N,N-dibutylamine)$_2$],
- [Zn(2-éthylhexanoate)$_2$(n-octylamine)],
- [Zn(2-éthylhexanoate)$_2$(n-octylamine)$_2$],
- [Zn(2-éthylhexanoate)$_2$(bis(2-éthylhexyl)amine)],
- [Zn(2-éthylhexanoate)$_2$(bis(2-éthylhexyl)amine)$_2$],
- [Zn(2-éthylhexanoate)$_2$(diisononylamine)], et
- [Zn(2-éthylhexanoate)$_2$(diisononylamine)$_2$.

D'autres avantages et caractéristiques de la présente invention apparaîtront à la lecture des exemples suivants donnés à titre illustratif nullement limitatif.

## EXEMPLES

### EXEMPLE 1 : Préparation des catalyseurs [Zn(carboxylate)$_2$(amine)$_n$]

a) Préparation des complexes [Zn(2-éthylhexanoate)$_2$(amine)$_n$], [Zn(naphténate)$_2$(amine)$_n$]et [Zn(néodécanoate)$_2$(amine)$_n$]

A une solution de 121.1 g d'acide néodécanoïque (0.7 mol), ou de 165.9 g d'acide naphthénique ou de 102 g d'acide 2-éthylhexanoïque à 99% dans 300 g de toluène est ajouté sur une heure 125.44 g d'une solution de méthylate de sodium à 30.1% poids dans le méthanol (0.7 mol). Ensuite, une solution de chlorure de zinc en léger excès (49.92 g à 98% poids, 0.359 mol) dans 50 g de méthanol est ajoutée en 40 minutes. L'azéotrope méthanol/toluène est distillé pendant 2h. Le mélange réactionnel est refroidi à température ambiante, puis le chlorure de sodium est filtré. La solution incolore et limpide est évaporée à sec (jusqu'à 70°C, 1 mbar) pour donner une huile visqueuse : 143.3 g de néodécanoate de zinc ou 229.2 g de naphthénate de zinc ou 123.2 g de 2-éthylhexanoate de zinc (rendement de 100%).

Les amines (n-octylamine, di(n-octyl)amine), N,N-dibutylamine, bis(2-éthylhexyl)amine, diisononylamine, N,N-diméthyl-N-butylamine, 3-aminopropyltriméthoxysilane, ainoéthyl-aminopropyltriméthoxysilane, aminopropyltriéthoxysilane ou 3-aminopropylméthyldiéthoxysilane sont ajoutées sans solvant sous forte agitation au carboxylates de zinc à la stoechiométrie voulue (soit au moins deux équivalent molaire d'amine lorsque l'on souhaite préparer majoritairement un complexe de dicarboxylate de zinc diaminé, soit entre 1 et 2 équivalents lorsqu'on souhaite préparer un mélange monoaminé ou diaminé des complexes de dicarboxylate de zinc correspondant, soit proche de 1 équivalent lorsque l'on souhaite préparer majoritairement le complexe dicarboxylate de zinc monoaminé correspondant.

On obtient les complexes recherchés, sous forme de liquide peu visqueux. La réaction de complexation est exothermique. Un solvant compatible avec l'application peut être utilisé pour diluer le carboxylate de zinc, comme des coupes pétrolières lourdes, de mélanges d'alcanes et/ou d'alkylaromatiques. Cependant, il est à remarquer qu'il est préférable d'ajouter directement l'amine au complexe de zinc sans la présence d'autres composés ou polymères pouvant avoir des fonctions réactives avec l'un des réactifs.

Suivant les carboxylates, la nature des amines et les quantités d'amine ajoutées on obtient les complexes suivants:

- [Zn(naphténate)$_2$(bis(2-éthylhexyl)amine)],
- [Zn(naphténate)$_2$(bis(2-éthylhexyl)amine)$_2$],

- [Zn(naphténate)$_2$(diisononylamine)],
- [Zn(naphténate)$_2$(diisononylamine)$_2$],
- [Zn(naphténate)$_2$(di(n-octyl)amine)],
- [Zn(naphténate)$_2$(di(n-octyl)amine)$_2$],
- [Zn(naphténate)$_2$(n-octylamine)],
- [Zn(naphténate)$_2$(n-octylamine)$_2$],
- [Zn(naphténate)$_2$(N,N-dibutylamine)],
- [Zn(naphténate)$_2$(N,N-dibutylamine)$_2$],
- [Zn(naphténate)$_2$(N,N-diméthyl-N-butylamine)$_2$],
- [Zn(naphténate)$_2$(N,N-diméthyl-N-butylamine)$_2$],
- [Zn(naphténate)$_2$(aminoéthyl-aminopropyltriméthoxysilane)],
- [Zn(naphténate)$_2$(aminoéthyl-aminopropyltriméthoxysilane)$_2$],
- [Zn(naphténate)$_2$(aminopropyltriéthoxysilane)],
- [Zn(naphténate)$_2$(aminopropyltriéthoxysilane)$_2$],
- [Zn(néodécanoate)$_2$(di(n-octyl)amine)] ;
- [Zn(néodécanoate)$_2$(di(n-octyl)amine)]$_2$],
- [Zn(néodécanoate)$_2$(n-octylamine)],
- [Zn(néodécanoate)$_2$(n-octylamine)$_2$],
- [Zn(néodécanoate)$_2$(N,N-dibutylamine)],
- [Zn(néodécanoate)$_2$(N,N-dibutylamine)$_2$],
- [Zn(néodécanoate)$_2$(3-aminopropyltriméthoxysilane)$_2$],
- [Zn(néodécanoate)$_2$(3-aminopropylméthyldiéthoxysilane)$_2$],
- [Zn(néodécanoate)$_2$(aminoéthyl-aminopropyltriméthoxysilane)],
- [Zn(néodécanoate)$_2$(aminoéthyl-aminopropyltriméthoxysilane)$_2$],
- [Zn(néodécanoate)$_2$(aminopropyltriéthoxysilane)],
- [Zn(néodécanoate)$_2$(aminopropyltriéthoxysilane)$_2$],
- [Zn(néodécanoate)$_2$(bis(2-éthylhexyl)amine)],
- [Zn(néodécanoate)$_2$(bis(2-éthylhexyl)amine)$_2$],
- [Zn(néodécanoate)$_2$(diisononylamine)],
- [Zn(néodécanoate)$_2$(diisononylamine)$_2$],
- [Zn(2-éthylhexanoate)$_2$(N,N-dibutylamine)]
- [Zn(2-éthylhexanoate)$_2$(N,N-dibutylamine)$_2$],
- [Zn(2-éthylhexanoate)$_2$(n-octylamine)],
- [Zn(2-éthylhexanoate)$_2$(n-octylamine)$_2$],
- [Zn(2-éthylhexanoate)$_2$(bis(2-éthylhexyl)amine)],
- [Zn(2-éthylhexanoate)$_2$(bis(2-éthylhexyl)amine)$_2$],
- [Zn(2-éthylhexanoate)$_2$(diisononylamine)], et
- [Zn(2-éthylhexanoate)$_2$(diisononylamine)$_2$].

Les abréviations pour ligands listés dans les formules des Tableaux ci-dessous sont comme suit :

- néodécanoate = ND
- naphténate = NAPH
- n-octylamine= OA
- di(n-octyl)amine) = DOA
- N,N-dibutylamine= DBA
- N,N-diméthyl-N-butylamine=DMBA

Dans le cas où lors de la synthèse on utilise une quantité d'amine variable (> à 0 équivalent et ≤ 2 équivalent, ou en léger excès), on obtient un mélange comprenant les complexes: [Zn(carboxylate)$_2$ (amine)] + [Zn(carboxylate)$_2$(amine)$_2$]. On utilisera alors dans ce cas la nomenclature suivante : « [Zn(carboxylate)$_2$(amine)$_x$]* et la valeur du symbole « x » fera référence au nombre de mole d'amine ajouté lors de la préparation du complexe par rapport au zinc et ayant réagi (c'est-à-dire se trouvant présent dans le complexe en tant que ligand). Ce type de nomenclature sera identifié dans les exemples par la mention du symbole « * » dans la formule du complexe.

Toutes les structures ont été confirmées par analyse RMN $^1$H, solvant $CDCl_3$.

**EXEMPLE 2 : Composition bi-composant RTV-2 - réticulant polysilicate d'éthyle :**

- (a1) : huile polydiméthylsiloxane hydroxylée ayant une viscosité de 14000 mPa.s à 25°C et bloquée à chacune des extrémités de chaînes par un motif siloxyle $M^{OH}$ de formule suivante : $(CH_3)_2(OH)SiO_{1/2}$,
- (b1) : silice de pyrogénation ayant une surface spécifique BET de 200 $m^2/g$, traitée par de l'hexaméthyldisilazane (HMDZ), dispersée dans un mélange de l'huile polydiméthylsiloxane hydroxylée (a1) et d'une huile polydiméthylsiloxane bloquée à chacune des extrémités de chaînes par un motif siloxyle M de formule suivante $(CH_3)_3SiO_{1/2}$,
- (b2) : quartz broyé présentant un diamètre moyen de particules de 10 $\mu$m,
- (d1) : catalyseur testé,
- (e) : polysilicate d'éthyle

L'activité des catalyseurs selon l'invention est évaluée par rapport :

- au catalyseur habituel [Comparatif : Fomrez® catalyst UL-28 = diméthylbis[(1-oxonéodécyl)oxy]stannane, de formule $[C_9H_{19}COO]_2Sn(Me)_2]$, et
- aux catalyseurs $[Zn(carboxylate)_2]$ respectifs.

Pour cela, on prépare un empâtage à partir des constituants suivants :

- 20,4 g d'une huile $\alpha,\omega$-bis(hydroxydiméthylsilyl)-polydiméthylsiloxane (a1),
- 61,3 g d'une charge (b1), et
- 18,3 g d'une charge (b2),

auquel on ajoute 1,5 g de polysilicate d'éthyle (réticulant) pour 100g d'empâtage et x gramme (y mmol) du catalyseur à tester (d1).

Pour les catalyseurs au Zinc (selon l'invention ou pour le comparatif), les quantités testées sont ajoutées dans 1,5 ml du solvant méthyl-tertiobutyl-éther (MTBE).

Tableau 1 : Constituants des compositions testées RTV-2 (réticulant polysilicate d'éthyle).

| Ingrédients | Exemples selon l'invention (grammes) | Comparatif (UL28) (gramme) |
|---|---|---|
| (a1) | 20.4 | 20.4 |
| (b1) | 61.3 | 61.3 |
| (b2) | 18.3 | 18.3 |
| (e) | 1.5g pour 100 g | 1.5 |
| (d1) | 2.66 mmol pour 100 g d'empâtage | 0.886 mmol pour 100 g composition (0.44g) |

En **RTV2,** les tests sont réalisés directement sur un mélange constitués des ingrédients (a1), (b1), (b2) et (e) auquel on ajoute et mélange le catalyseur à tester (d1). Le temps de travail ou "pot-life" est d'abord mesuré (temps au-delà duquel la viscosité du mélange empêche son utilisation c'est-à-dire le temps nécessaire à la formation d'un gel), puis à partir d'un autre mélange, un pion de 6 mm d'épaisseur est coulé et après durcissement on mesure les duretés Shore A (dessus et dessous) d'un pion démoulé d'épaisseur 6 mm dans des conditions régulées (23°C et 50% d'humidité relative) et sur des temps croissants.. Dans les tableaux de résultats le symbole « > » correspond aux valeurs de dureté mesurées sur la partie supérieure du pion et le symbole « < » correspond aux valeurs de dureté mesurées sur la partie inférieure du pion moins exposée à l'air ambiant que la partie supérieure. Mesure Dureté Shore A, notée DSA = mesures effectuées selon les indications de la norme ASTM-D2240). Le temps de travail ou "pot-life" est le temps au-delà duquel la viscosité du mélange empêche son utilisation.

Deux catalyseurs en tests comparatifs :

- le dinéodécanoate de diméthylétain (UL28) (essai 1bis), et
- $[Zn(ND)_2]$ avec ND= néodécanoate => $[Zn(carboxylate)_2]$

Tableau 2 : Tests RTV-2 - réticulant polysilicate d'éthyle et complexes [Zn(néodécanoate)$_2$(amine)$_n$]

| Essais | Catalyseur testé (d1) | mg pour 50g d'empâtage | Temps de travail (mn) | Dureté Shore A sur 6mm | | | |
|---|---|---|---|---|---|---|---|
| | | | | 1 jour | | 4 jours | |
| | | | | > | < | > | < |
| 1 | [Zn(ND)$_2$)] | 544 | > 2 jours | - | - | - | - |
| Ibis | UL28 | 220 | 40 | 24 | 23 | 26 | 26 |
| 2 | [Zn(ND)$_2$(OA)] | 716 | 157 | 10 | 6 | 20 | 17 |
| 3 | [Zn(ND)$_2$(OA)$_{1,5}$]* | 802 | 73 | 17 | 14 | 19 | 18 |
| 4 | [Zn(ND)$_2$(OA)$_2$] | 888 | 32 | 17 | 15 | 18 | 17 |
| 5 | [Zn(ND)$_2$(DBA)] | 716 | 120 | 10 | 7 | 19 | 16 |
| 6 | [Zn(ND)$_2$ (DBA)$_{1,5}$]* | 802 | 53 | 16 | 13 | 20 | 18 |
| 7 | [Zn(ND)$_2$(DBA)$_2$] | 888 | 39 | 17 | 13 | 20 | 18 |

• *Dans le cas où l'on utilise 1,5 équivalent d'amine par rapport au zinc pour la préparation du catalyseur, on obtient un mélange des complexes comprenant 1 ligand ou 2 ligands amine (qui peuvent aussi se trouver sous une forme oligomérique) et dans ce cas la nomenclature utilisée pour décrire le complexe est comme suit : [Zn(carboxylate)$_2$ (amine)$_{1,5}$].
• Pour l'essai n°1 (comparatif catalyseur [Zn(ND)$_2$)]), le pion n'était pas assez dur pour mesurer une dureté DSA après 1, 4 ou 7 jours (d'où le symbole « - » dans le Tableau 2).

Tableau 3 : Tests RTV-2 - réticulant polysilicate d'éthyle et complexes [Zn(naphténate)$_2$(amine)$_n$]

| Essais | Catalyseurs testés (d1) | mg pour 50g d'empâtage | Temps de travail | Dureté Shore A sur 6mm | | | |
|---|---|---|---|---|---|---|---|
| | | | | 1 jour | | 4 jours | |
| | | | | > | < | > | < |
| 8 | [Zn(NAPH)$_2$] | 714 | 48h | - | - | - | - |
| 9 | [Zn(NAPH)$_2$(OA)] | 886 | 3h06 | 7 | 6 | 17 | 16 |
| 10 | [Zn(NAPH)$_2$(OA)$_2$] | 1058 | 30 mn | 16 | 16 | 17 | 16 |
| 11 | [Zn(NAPH)$_2$(DBA)] | 886 | 2h48 mn | 8 | 6 | 18 | 16 |
| 12 | [Zn(NAPH)$_2$(DBA)$_2$] | 1058 | 46 mn | 17 | 15 | 19 | 18 |
| 13 | [Zn(NAPH)$_2$(DMBA)] | 849 | 7h15mn | <1 | <1 | 6c | 6 |
| 14 | [Zn(NAPH)$_2$(DMBA)$_2$] | 983 | 5h25mn | <1 | <1 | 14c | 15 |

• Pour l'essai n° 8 (comparatif catalyseur [Zn(NAPH)$_2$]), le pion n'était pas assez dur pour mesurer une dureté DSA après 1, 4 ou 7 jours (d'où le symbole « - » dans le Tableau 3).

Tableau 4 : Tests RTV-2 - réticulant polysilicate d'éthyle et complexes [Zn(éthyl-2 hexanoate naphténate)$_2$(amine)$_n$]

| Essais | Catalyseurs testés (d1) | mg pour 50g d'empâtage | Temps de travail | Dureté Shore A sur 6mm | | | |
|---|---|---|---|---|---|---|---|
| | | | | 1 jour | | 4 jours | |
| | | | | > | < | > | < |
| 15 | [Zn(éthyl-2 hexanoate)$_2$] | 468 | 48h | - | - | - | - |

(suite)

| Essais | Catalyseurs testés (d1) | mg pour 50g d'empâtage | Temps de travail | Dureté Shore A sur 6mm | | | |
|---|---|---|---|---|---|---|---|
| | | | | 1 jour | | 4 jours | |
| | | | | > | < | > | < |
| 16 | [Zn(éthyl-2 hexanoate)$_2$ (DBA)] | 639 | 80 mn | 13 | 12 | 24 | 21 |
| 17 | [Zn(éthyl-2 hexanoate)$_2$ (DBA) $_2$] | 811 | 40 mn | 17 | 14 | 16 | 19 |
| • Pour l'essai n° 15 (comparatif catalyseur [Zn(éthyl-2 hexanoate)$_2$], le pion n'était pas assez dur pour mesurer une dureté DSA après 1 et 4 jours (d'où le symbole « - » dans le Tableau 4). | | | | | | | |

EXEMPLE 3 : Composition bi-composant RTV-2 - réticulation à 110°C - réticulant vinyltriméthoxysilane ou silicate d'éthyle prépolymérisé

Partie P2-1: on prépare le mélange suivant :

- 60 parties en poids d'un empâtage constitué d'un mélange d'huile polydiméthylsiloxane $\alpha,\omega$-dihydroxylée (25,6% en poids, de viscosité 14000 mPa.s) et de silice pyrogénée AEROSIL® 200 traité in-situ par de l'hexaméthyldisilazane (HMDZ) et de surface spécifique de 200 $m^2$/g,
- 20 parties en poids d'huile polydiméthylsiloxane $\alpha,\omega$-dihydroxylée (viscosité 14000 mPa.s),
- 18 parties en poids de quartz broyé (commercialisé par la société Sifraco),
- 1 partie poids d'huile $\alpha,\omega$-bis(diméthylhydroxysilyl)-polydiméthylsiloxane (viscosité dynamique à 25°C de 750 mPa.s)
- 0,1 eau, et
- 0,9 parties en poids d'une base colorante

Partie P2-2: on prépare le mélange suivant :

- 73,8 parties en poids mélange d'une huile $\alpha,\omega$-bis(diméthylhydroxysilyl)-polydiméthylsiloxane viscosité de 50.000 mPa.s,
- 5,8 parties en poids huile $\alpha,\omega$-bis(diméthylhydroxysilyl)-polydiméthylsiloxane viscosité dynamique à 25°C de 14000 mPa.s
- 11,5 parties en poids de silice A200 de silice pyrogénée AEROSIL® 200 traité in-situ par ajoût d'hexaméthyldisilazane (HMDZ) et de surface spécifique de 200 $m^2$/g, et
- 8,9 parties de polydiméthylsiloxane de viscosité dynamique à 25°C de 500 mPa.s.

Pour les parties P1 : un réticulant et le catalyseur testé. 2 types de réticulant ont été utilisés : un silicate d'éthyle prépolymérisé (à 14 mmol/g de groupe éthoxy), et un vinyltriméthoxysilane (VTMO) prépolymérisé (à 14.2 mmol/g de méthoxy).

**Essais**

a) A un mélange de 49.25g de partie P2-1 et 0.75g de réticulant (silicate avancé) ont été ajoutés le catalyseur à tester :

- 716 mg de [Zn(ND)$_2$(OA)] (essai 18),
- 802 mg de [Zn(ND)$_2$(OA)$_{1,5}$]* (essai 19),
- 888 mg de [Zn(ND)$_2$(OA)$_2$] (essais 20).

Ensuite, une petite quantité a été déposée dans une coupelle en téflon, et lissée pour obtenir un film d'épaisseur entre 0.5 et 1 mm, et les coupelles ont été mis à l'étuve à 110°C, à l'hygrométrie du laboratoire (environ 35-40% à 25°C).
Dans le Tableau 5 ci-dessous, est indiqué le temps de travail du mélange (durée à partir de laquelle le mélange ne file plus) et les durées de réticulation à l'étuve à 110°C.

Tableau 5 - Composition RTV-2 - réticulation à 110°C - réticulant silicate d'éthyle prépolymérisé

| Essais | catalyseur | Temps de travail à 25°C | Réticulation à 110°C |
|---|---|---|---|
| 18 | $[Zn(ND)_2(OA)]$ | 70min | Réticulé à 15 mn, et touché collant à 30 mn |
| 19 | $[Zn(ND)_2(OA)_{1,5}]$* | 35min | Réticulé à 8 mn et touché non collant à 15 mn |
| 20 | $[Zn(ND)_2(OA)_2]$ | 17min | Réticulé à 7 mn et touché non collant à 7 mn |
| *Dans le cas où l'on utilise 1,5 équivalent d'amine (octylamine) pour la préparation du catalyseur, on obtient un mélange des complexes comprenant 1 ligand ou 2 ligands amine (qui peuvent aussi se trouver sous une forme oligomérique) et dans ce cas la nomenclature utilisée pour décrire le complexe est comme suit : $[Zn(carboxylate)_2(amine)_{1,5}]$. | | | |

Pour une application bi-composant RTV-2, nécessitant une vitesse de réticulation rapide avec un touché non collant de l'élastomère obtenu après réticulation, le catalyseur selon l'invention contenant deux ligand amine est plus performant que celui ne contenant qu'un ligand amine.

b) A un mélange de 25g de partie P2-1 et 0.38 g de réticulant (vinyltriméthoxysilane ou VTMO prépolymérisé à 14.2 mmol/g de méthoxy) a été ajouté le catalyseur à tester (444 mg dans chacun des tests).

Une petite quantité a été déposée dans une coupelle en téflon, et lissée pour obtenir un film d'épaisseur entre 0.5 et 1mm, et les coupelles ont été mis à l'étuve à 110°C, à l'hygrométrie du laboratoire (environ 35-40% à 25°C).

Dans le Tableau 6 ci-dessous, est indiqué le temps de travail du mélange (durée à partir de laquelle le mélange ne file plus) et les durées de réticulation à l'étuve à 110°C.

Tableau 6 - Composition RTV-2 - réticulation à 110°C - réticulant VTMO

| Essais | catalyseur | Temps de travail à 25°C | Réticulation à 110°C |
|---|---|---|---|
| 21 | $[Zn(ND)_2(OA)_2]$ | 24 min | Réticulé à 8 mn et touché non collant à 8 mn |
| 22 | $[Zn(ND)_2(DBA)_2]$ | 35min | Réticulé à 10 mn et touché collant persiste |

Pour une application bi-composant RTV-2, nécessitant une vitesse de réticulation rapide avec un touché non collant de l'élastomère obtenu après réticulation, le catalyseur selon l'invention contenant deux ligands amine primaire (OA= n-octylamine) est plus performant que celui contenant deux ligands amine secondaire (DBA= N,N-dibutylamine).

c) L'activité des complexes $[Zn(ND)_2(OA)_2]$ et $[Zn(ND)_2(DBA)_2]$ sont évalués avec la base partie P2-2 décrite ci-dessus. A un mélange de 25g de partie P2-2 et soit 0,715g de silicate d'éthyle précondensé ou 0,70 g de VTMO précondensé ont été ajoutés les catalyseurs (0,665 mmol). Une petite quantité a été déposée dans une coupelle en téflon et lissée pour obtenir un film d'épaisseur entre 0.5 et 1mm, et les coupelles ont été mis à l'étuve à 110°C, à l'hygrométrie du laboratoire (environ 35-40% à 25°C).

Tableau 7 : Composition RTV-2 - réticulation à 110°C

| **Essais** | **Réticulant silicate précondensé** | **Temps de travail** | **Réticulation à 110°C** |
|---|---|---|---|
| 23 | $[Zn(ND)_2(OA)_2]$ | 10 min | Réticulé à 5 mn, transparent et touché non collant |
| 24 | $[Zn(ND)_2(DBA)_2]$ | 13 min | Réticulé à 8 mn, transparent et touché collant encore à 8 mn |
| | **Réticulant VTMO précondensé** | | |
| 25 | $[Zn(ND)_2(OA)_2]$ | 15 min | Réticulé et touché non collant à 5 mn |
| 26 | $[Zn(ND)_2(DBA)_2]$ | < 10 min | Réticulé à 5 min mais reste collant |

Pour une application bi-composant RTV-2, nécessitant une vitesse de réticulation rapide avec un touché non collant de l'élastomère obtenu après réticulation, le catalyseur selon l'invention contenant deux ligands amine primaire (OA= n-octylamine) est plus performant que celui contenant deux ligands amine secondaire (DBA= N,N-dibutylamine).

d) L'activité des complexes [Zn(néodécanoate)$_2$(3-aminopropyltriméthoxysilane)$_2$] et [Zn(néodécanoate)$_2$(3-aminopropylméthyldiéthoxysilane)$_2$]est évalué avec la base partie P2-2 décrite ci-dessus. A un mélange de 25g de partie P2-2 et soit 0,715g de silicate d'éthyle précondensé ou 0,70 g de VTMO précondensé ont été ajoutés les catalyseurs (0,665 mmol). Une petite quantité a été déposée dans une coupelle en téflon et lissée pour obtenir un film d'épaisseur entre 0.5 et 1mm, et les coupelles ont été mis à l'étuve à 110°C, à l'hygrométrie du laboratoire (environ 35-40% à 25°C).

Tableau 8 : Composition RTV-2 - réticulation à 110°C

| Essais | Réticulant silicate précondensé | Temps de travail | Réticulation à 110°C |
|---|---|---|---|
| 27 | [Zn(néodécanoate)$_2$(3-aminopropylméthyldiéthoxysilane)$_2$] | 30 mn | Réticulé à 7 mn, transparent et touché non collant |
| | **Réticulant VTMO précondensé** | | |
| 28 | [Zn(néodécanoate)$_2$(3-aminopropyltriméthoxysilane)$_2$] | 20 mn | Réticulé à 5 mn, transparent et touché non collant |

Pour des applications en couche mince à chaud nécessitant de l'adhérence, les complexes de carboxylates de zinc-silane aminés montrent une excellentes activité autant avec des réticulants de type méthoxy qu'éthoxy.

EXEMPLE 4 à 8 : Composition bi-composant RTV-2 pour l'application moulage (composé organosilicié **A** = polydiméthylsiloxane $\alpha,\omega$-dihydroxylé ; Réticulant alcoxy).

Dans les présents exemples :

- le « Pot-life » correspond à un temps de gélification à 23°C, en min, mesuré avec un appareil automatique à mouvement alternatif selon la norme AFNOR NF T-77 107
- l'abréviation « DSA » signifie la dureté, en Shore A (noté ShA), mesurée sur la face confinée d'un pion de 6 mm d'épaisseur selon la norme ASTM D-2240. La DSA indiquée entre parenthèse correspond à la dureté mesurée sur la face supérieure du pion (en contact avec l'air).
    - La « DSA 24h » correspond à la dureté après 24 heures de réticulation à température ambiante ;
    - La « DSA finale » correspond à la dureté après réticulation complète à température ambiante.
- l'abréviation « R/R » signifie la résistance à la rupture, en MPa selon la norme AFNOR NF T-46002,
- l'abréviation « A/R » signifie l'allongement à la rupture en % selon la norme précédente,
- l'abréviation « R/d » signifie la résistance à la déchirure en N/mm.

On prépare une composition bi-composante comprenant des parties P1 et P2 dont les compositions sont décrites dans le Tableau 9.

1) Nature des ingrédients cités dans la partie P2 des compositions testées :

- **a** : Empâtage constitué d'un mélange d'huile$\alpha,\omega$-bis(diméthylhydroxysilyl)-polydiméthylsiloxane (25,6% en poids, de viscosité 14000 mPa.s) et de silice pyrogénée AEROSIL® 200 traité in-situ par de l'hexaméthyldisilazane (HMDZ) et de surface spécifique de 200 m$^2$/g,
- **b1** : Huile polydiméthylsiloxane bloquée à chacune des extrémités de chaînes par un motif (HO)$(CH_3)_2SiO_{1/2}$ ayant une viscosité dynamique de 14 000 mPa.s à 25°C.
- **b2 :** Huile polydiméthylsiloxane bloquée à chacune des extrémités de chaînes par un motif (HO)$(CH_3)_2SiO_{1/2}$ ayant

une viscosité dynamique de 3 500 mPa.s à 25°C.

- **c** : Quartz broyé (commercialisé par la société Sifraco),
- **d** : Huile polydiméthylsiloxane bloquée à chacune des extrémités de chaînes par un motif $(HO)(CH_3)_2SiO_{1/2}$ ayant une viscosité dynamique de 750 mPa.s à 25°C.
- **e** : Eau
- **f** : Base colorante

2) Nature des ingrédients cités dans la partie P1 des compositions:

- **g1,x** : Catalyseur $Zn(ND)_2(OA)_x$
- **g2,x** : Catalyseur $Zn(ND)_2(DBA)_x$
- **g3** : Di-néodécanoate de diméthylétain, de formule $[C_9H_{19}COO]_2Sn(Me)_2]$, commercialisé sous la référence Fomrez® catalyst UL-28
- **h1** : Silicate d'éthyle partiellement hydrolysé et condensé, caractérisé par une teneur en motif (OEt) = 14mmol/g
- **h2** : Silicate de propyle, caractérisé par une teneur en motif (OPr) = 13,3mmol/g
- **h3** : Trimethoxyphenylsilane
- **i** : Huile polydiméthylsiloxane bloquée à chacune des extrémités de chaînes par un motif $(CH_3)_3SiO_{1/2}$ ayant une viscosité de 50 mPa.s à 25°C.
- **j** : Plastifiant commercialisé sous le nom de Mediaplast.

Les Tableaux 9 et 10 ci-après décrivent les compositions testées :

Tableau 9 : Composants des parties P2

| **Partie P2** | P2-a | P2-b | P2-c |
|---|---|---|---|
| a1 | 60,2 | 60,2 | 60,2 |
| b1 | 20 | 0 | 0 |
| b2 | 0 | 20 | 20 |
| c | 18 | 18 | 18 |
| d | 1 | 1 | 1 |
| e | 0,1 | 0,1 | 0 |
| f | 0,7 | 0,7 | 0,8 |

Tableau 10 : Composants des parties P1

| **Partie P1** | P1-a | P1-b | P1-c | P1-d | P1-e | P1-f | P1-g | P1-i | P1-j | P1-k | P1-l | P1-h Comparatif |
|---|---|---|---|---|---|---|---|---|---|---|---|---|
| x | x=1 | x=1,2* | x=1,4* | x=1,5* | x=2 | x=1,5* | x=2 | x=1,5* | x=1,5* | x=1,5* | x=1,5* | |
| g1,x | 17,5 (2eq) | 18,5 (2eq) | 19,4 (2eq) | 19,9 (2eq) | 23,9 (2eq) | | | 19,9 (2eq) | 19,9 (2eq) | | | |
| g2,x | | | | | | 21,6 (2eq) | 23,9 (2eq) | | | 21,6 (2eq) | 21,6 (2eq) | |
| g3 | | | | | | | | | | | | 8,8 (1eq) |
| h1 | 30 | 30 | 30 | 30 | 30 | 30 | 30 | 40 | 50 | 40 | 50 | 30 |
| i+j | 52,5 | 51,5 | 50,6 | 50,3 | 46,1 | 48,4 | 46,1 | 40,1 | 30,1 | 38,4 | 28,4 | 61,2 |

*Dans le cas où l'on utilise entre un et deux équivalents d'amine, c'est-à-dire 1,2, 1,4 ou 1,5 équivalent d'amine pour la préparation du catalyseur selon l'invention, on obtient un mélange des complexes comprenant 1 ligand et 2 ligands amine (qui peuvent aussi se trouver sous une forme oligomérique).

3) Mise en oeuvre

A 100 parties en poids de la composante ou partie P2, on ajoute 5 parties en poids de la composante P1. La réticulation est obtenue après mélange manuel à l'aide d'une spatule, à 23 °C. Le profil cinétique de réticulation est exprimé par le pot-life et la mesure de DSA 24h. Les propriétés de l'élastomère réticulé sont mesurés (DSA finale et éventuellement propriétés mécaniques).

4) Tests

4a) Exemples 4

Dans ces exemples, on prépare des RTV-2 en mélangeant la partie P2-b à des parties P1 contenant un catalyseur de formule moyenne $[Zn(ND)_2(Amine)_{1,5}]$* (avec Amine = OA ou DBA) et différentes quantités de silicate d'éthyle partiellement hydrolysé et condensé comme réticulant. Les compositions sont détaillées dans les Tableaux 9 et 10. Les résultats sont regroupés dans le Tableau 11 ci-dessous.

Tableau 11 : Exemples selon l'invention et comparatif

| **Exemples** | 4a | 4b | 4c | 4d | 4e | 4f | Comp 4g |
|---|---|---|---|---|---|---|---|
| **Partie P2** | P2-b | P2-b | P2-b | P2-b | P2-b | P2-b | P2-b |
| **Partie P1** | P1-d | P1-i | P1-j | P1-f | P1-k | P1-l | Comp. P1h |
| Catalyseur | $[Zn(ND)_2(OA)_{1,5}]$* | | | $[Zn(ND)_2(DBA)_{1,5}]$* | | | UL28 |
| OR/OH | 13 | 17 | 21 | 13 | 17 | 21 | 13 |
| **Evaluation** | | | | | | | |
| Pot-life | 87 | 89 | 92 | 118 | 103 | 88 | 91 |
| DSA 24h | 14 (15) | 18 (20) | 18 (21) | 11 (11) | 14 (16) | 17 (19) | 22 (23) |
| DSA finale | 23 (24) | 25 (26) | 27 (29) | 20 (22) | 24 (25) | 28 (29) | 27 (27) |
| R/R | / | 3,5 | / | / | / | 4 | 3,8 |
| A/R | / | 360 | / | / | / | 320 | 325 |
| R/D | / | 22 | / | / | / | 21 | 21 |

* Le Ratio OR/OH = ratio molaire (fonction alcoxy (OR) du réticulant) / (fonction OH de type silanol du polyorganosiloxane $\alpha,\omega$-bis(diméthylhydroxysilyl)-polydiméthylsiloxane). Les exemples ci-dessus mettent en évidence l'efficacité de ces nouveaux catalyseurs :

- Pour catalyser la réaction de polycondensation avec un profil cinétique intéressant pour l'application moulage. En effet, lorsque l'on utilise un ratio molaire OR/OH compris entre 13 et 21, et de préférence entre 15 et 19, un bon compromis est atteint en termes de Pot-life (temps de travail) sans perte de dureté à 24h et finale. De plus, on remarque que la réticulation a lieu de la même façon en confiné et au contact de l'air (en effet, les résultats de DSA sont équivalents sur la face en confiné et sur la face supérieure).
- Pour former un réseau élastomérique avec de bonnes propriétés mécaniques, similaires à celles obtenues traditionnellement avec l'étain.

4b) Exemples 5 et 6.

Dans ces exemples, on prépare des catalyseurs de formule moyenne $[Zn(ND)_2(OA)_x]$ ou $[Zn(ND)_2(DBA)_x]$ en faisant varier la valeur du nombre d'équivalent d'amine lors de la synthèse du catalyseur (stoechiométrie voulue entre un et deux équivalents molaires d'amine par rapport au zinc). On prépare ensuite des RTV-2 en mélangeant une partie P2 (a ou b) à des parties P1 contenant le catalyseur synthétisé de formule moyenne $[Zn(ND)_2(Amine)_x]$* (avec Amine = OA ou DBA) et une quantité donnée de silicate d'éthyle partiellement hydrolysé et condensé comme réticulant. Les compositions sont détaillées dans les Tableaux 9 et 10. Les résultats sont regroupés dans le Tableau 12 ci-dessous.

Tableau 12 : Exemples selon l'invention

| | $[Zn(ND)_2(OA)_x]$ | | | | | $[Zn(ND)_2(DBA)_x]$ | |
|---|---|---|---|---|---|---|---|
| **Exemples** | 5a | 5b | 5c | 5d | 5e | 5f | 5g |
| **Partie P2** | P2-a (à base de **b1** - Viscosité = 14000 mPa.s) ; OR/OH = 14 | | | | | | |
| **Partie P1** | P1-a | P1-b | P1-c | P1-d | P1-e | P1-f | P1-g |
| Pot-life | 106 | 83 | 55 | 37 | 30 | 57 | 31 |
| DSA 24h | 6 (7) | 10 (10) | 13 (14) | 13 (14) | 15 (16) | 9 (9) | 13 (15) |
| DSA finale | 21 (23) | 21 (23) | 22 (23) | 21 (23) | 20 (22) | 20 (22) | 20 (22) |
| **Exemples** | 6a | 6b | 6c | 4a | 6d | 4d | 6e |
| **Partie P2** | P2-b (à base de **b2** - Viscosité = 3500 mPa.s); OR/OH = 13 | | | | | | |
| **Partie P1** | P1-a | P1-b | P1-c | P1-d | P1-e | P1-f | P1-g |
| Pot-life | 244 | 173 | 119 | 87 | 72 | 118 | 77 |
| DSA 24h | 5 (6) | 7 (8) | 12 (14) | 14 (15) | 15 (17) | 11 (11) | 14 (15) |
| DSA finale | 22 (24) | 24 (24) | 22 (24) | 23 (24) | 19 (21) | 20 (22) | 22 (24) |

Les exemples ci-dessus montrent que la réactivité du catalyseur dicarboxylate de zinc aminé selon l'invention peut être modulée en ajustant le nombre de ligand amine: en effet, lorsque le catalyseur dicarboxylate de zinc est plus riche en ligand amine (deux ligands versus 1 ligand), la réactivité augmente et le pot-life diminue. La dureté finale est constante. De plus, on remarque qu'il est possible d'augmenter le Pot-life (= durée de vie du bain) en remplaçant seulement l'huile $\alpha,\omega$-di(diméthylhydroxysilyl)-polydiméthylsiloxane) de viscosité dynamique à 25°C de 14000 mPa.s utilisée dans la partie P2-a par une huile $\alpha,\omega$-di(diméthylhydroxysilyl)-polydiméthylsiloxane) de plus faible viscosité 3500 mPa.s (partie P2-b), et ceci sans détériorer les duretés DSA 24h et DSA finale.

4c) Exemple 7

Dans cet exemple, on prépare des RTV-2 en mélangeant des parties P2 contenant ou non de l'eau (P2-b ou P2-c) à une partie P1 contenant un catalyseur de formule moyenne $Zn(ND)_2(OA)_{1,5}$ et une quantité donnée de silicate d'éthyle partiellement hydrolysé et condensé comme réticulant. Les compositions sont détaillées dans les Tableaux 9 et 10. Les résultats sont regroupés dans le Tableau 13 ci-dessous.

Tableau 13 : Exemples selon l'invention avec le catalyseur $[Zn(ND)_2(OA)_{1,5}]$*

| **Exemples** | 7a | 4b |
|---|---|---|
| **Partie P2** | P2-c (0% eau) | P2-b (0,1% eau) |
| **Partie P1** | P1-i | P1-i |
| Pot-life | 96 | 89 |
| DSA 24h | 18 (20) | 18 (20) |
| DSA finale | 24 (26) | 25 (26) |

Les exemples ci-dessus montrent que les catalyseurs dicarboxylate de zinc ne nécessitent pas l'ajout d'eau dans le milieu pour être actif contrairement au catalyseur classique à base d'étain, qui lorsqu'ils sont formulés en bi-composant (RTV-2) ont besoin de la présence d'eau dans l'une des parties du bi-composant pour améliorer la réactivité.

4d) Exemple 8

Dans cet exemple, on prépare des RTV-2 en mélangeant une partie P2-b à des parties P1 contenant un catalyseur de formule moyenne $[Zn(ND)_2(OA)_{1,5}]$* et différents réticulants. Les compositions sont détaillées dans les Tableaux 9 (Partie P2-b) et 14 (Partie P1). Les résultats sont regroupés dans le Tableau 15.

Tableau 14

| Partie P1 | P1-f | P1-m | P1-n |
|---|---|---|---|
| x | x=1,5 | x=1,5 | x=1,5 |
| g2,x | 21,6 (2eq) | 24,7 (2eq) | 24,7 (2eq) |
| h1 | 30 | 22 | 22 |
| h2 | | 8 | |
| h3 | | | 8 |
| i+j | 48,4 | 45,3 | 45,3 |

Tableau 15

| Exemples | 4d | 8a | 8b |
|---|---|---|---|
| Partie P2 | P2-b | P2-b | P2-b |
| Partie P1 | P1-f | P1-m | P1-n |
| Pot-life | 118 | 139 | 88 |
| DSA 24h | 11 (11) | 8 (8) | 8 (8) |
| DSA finale | 20 (22) | 20 (21) | 18 (20) |

Les exemples ci-dessus montrent l'efficacité des nouveaux catalyseurs pour former des réseaux avec différents réticulant alcoxylés et des profils cinétiques variés.

Exemple 9 : Formulation d'un bi-composant RTV-2 (réticulant alcoxy) enduction sur dentelle constituée d'un tissu de polyamide + élasthanne :

Deux types de formulations ont été testés dans plusieurs conditions de réticulation : température, humidité, ajout d'eau, dose de catalyseur.

Abréviations utilisées dans cet exemple :

ND = néodécanoate
OA = octylamine
AMEO = aminopropyltriéthoxysilane
HMDZ = hexaméthyldisilazane
DS6490: Dynasylan® 6490 Vinyltriméthoxysilane (VTMO) hydrolysé partiellement et condensé => Silicate d'éthyle partiellement hydrolysé et condensé, caractérisé par une teneur en motif (OEt) = 14mmol/g

Les mélanges sont réalisés au Speed-Mixer, en introduisant dans l'ordre l'empâtage (partie P2) puis la partie (le réticulant + catalyseur). On obtient la composition suivante :

- 25 g empâtage TCS 7370
- 0.715 g réticulant (DS6490) ou
- x mmol de catalyseur ($[Zn(ND)_2(AMEO)_2]$ ou $[Zn(ND)_2(OA)_2]$)

Les enductions sont réalisées à la râcle de 0,5 mm sur une dentelle constituée d'un tissu polyamide + élastanne (épaisseur d'enduction = 0,41-0,48 mm). La réticulation s'effectue à 80°C en étuve ventilée. La force de blocking permet de vérifier que l'enduction est réticulée en sortie de l'étuve, une valeur comprise entre 2 et 4,5 N/2cm est recherchée pour un bon résultat. Elle est mesurée en repliant la dentelle enduite sur elle-même dès sa sortie de l'étuve (avec un contact face enduite sur face enduite), puis en mettant un poids d'environ 1 kg sur l'éprouvette pendant 24 H, puis on réalise un test de pelage pour vérifier si l'enduction silicone colle ou non sur elle-même. Les résultats sont consignés dans le Tableau 16 suivant :

Tableau 16.

| Essai | Catalyseur | Taux de catalyseur (mmol) | Temps (mn) | Blocking (N/2cm) |
|---|---|---|---|---|
| 9-1 | $[Zn(ND)_2(AMEO)_2]$ | 0,665 | 10 | 4,40 |

La même expérience est effectué mais en remplaçant le réticulant (DS6490) par un silicate d'éthyle partiellement hydrolysé et condensé (même nombre d'équivalent molaire) et en doubleant le nombre d'équivalent de catalyseur testé (1,33 mmol au lieu de 0,665 mmol dans le test précédent). Les résultats sont consignés dans le Tableau 17 suivant.

Tableau 17.

| Essai | Catalyseur | Taux de catalyseur (mmol) | Temps (mn) | Blocking (N/2cm) |
|---|---|---|---|---|
| 9-2 | $[Zn(ND)_2(OA)_2]$ | 1,33 | 10 | 2,02 |
| 9-3 | $[Zn(ND)_2(AMEO)_2]$ | 1,33 | 10 | 1,91 |

On obtient de bons résultats pour la propriété de blocking.

Exemple 10 : Comparatif

L'exemple comparatif 4 de la demande de brevet US 2008/0207938 a été repris :

Composition 10-1 :

- 750 g d'une huile α,ω-bis(diméthylhydroxysilyl)-polydiméthylsiloxane de viscosité dynamique à 25°C de 75000 mPa.s,
- 135 g d'une huile α,ω- bis(triméthylsilyl)-polydimethylsiloxane viscosité dynamique à 25°C de 1000 mPa.s
- 10,3 g méthyltriméthoxysilane
- 5,0 g vinyltriméthoxysilane
- 0,16 g zinc octoate (0,45 mmol)
- 0,32 g de dibutylamine (2.48 mmol)

La composition 10-1 est mélangée pendant 10 mn à l'abri de l'humidité de l'air ambiant. Après 72h, des groupes silanols sont toujours détectés selon le protocole décrit dans cet exemple indiquant que les groupements silanol n'ont donc pas réagit. Ainsi, cet exemple de l'art antérieur montre qu'un mélange d'octoate de zinc et de dibutylamine (en excès molaire) ne permet pas la fonctionnalisation (protection des groupements silanols en groupement alcoxylés stable au stockage).

Exemple 11

- Abréviation : ND : néodécanoate .

En pot polypropylène de 100 ml sont mélangés 70 g d'une huile α,ω-bis(diméthylhydroxysilyl)-polydiméthylsiloxane de viscosité dynamique à 25°C de 750 mPa.s (huile 48V750), 6 g méthyltriméthoxysilane (MTMS) et 3 g de vinyltriméthoxysilane (VTMO) et le catalyseur a testé est ajouté et le mélange est agité à 700 t/min sous agitation par barreau magnétique et ciel d'argon, c'est-à-dire en absence d'humidité de l'air pendant une heure de manière a effectué la fonctionnalisation. Puis, le mélange est alors coulé dans le couvercle du récipient et mis en présence de l'humidité de l'air de manière à estimer l'effet catalytique sur le durcissement de la composition.
L'activité du catalyseur $[Zn(ND)_2(DBA)]$ a été comparé à l'ajout séparé du complexe $[Zn(ND)_2]$ suivi de l'addition d'une quantité de 2 équivalent molaire N,N-dibutylamine (DBA) pour évaluer si le catalyseur testé peut durcir une composition silicone durcissable au contact de l'humidité de l'air.

Tableau 18.

| Catalyseurs | Aspect de la composition après 24 heures au contact de l'humidité de l'air |
|---|---|
| Invention : $[Zn(ND)_2(DBA)]$ 190 mg (0.35 mmol) | Elastomère reticulé en profondeur |
| Invention: [Zn(ND)2(DBA)2] 235 mg (0.35 mmol) | Elastomère reticulé en profondeur |
| Comparatif : $[Zn(ND)_2]$ (143 mg) puis 2 éq. DBA (92 mg = 128 $\mu$l) | Composition visqueuse non réticulée |

Vérification de l'efficacité des catalyseurs selon l'invention en tant que catalyseur de fonctionnalisation (protection des groupements silanols en groupement alcoxylés stable au stockage) :

En pot polypropylène de 100 ml sont mélangés 70 g d'une huile $\alpha,\omega$-bis(diméthylhydroxysilyl)-polydiméthylsiloxane de viscosité dynamique à 25°C de 750 mPa.s (huile 48V750), 6 g méthyltriméthoxysilane (MTMS) et 3 g de vinyltriméthoxysilane (VTMO) sous agitation par barreau magnétique et ciel d'argon. Le catalyseur est ajouté (sous agitation entre chaque) et le mélange est agité à 700 t/min. Des prélèvements (0.5 ml environ) sont réalisés après 15 min, 30 min, 1h ou plus. Quelques gouttes de titanate de butyle sont ajoutées aux prélèvements. Si la conversion n'est pas complète, un gel se forme instantanément lors du mélange à l'aide d'une spatule. Si la conversion est complète, le mélange reste fluide.

Les résultats sont consignés dans le tableau suivant :

Tableau 19.

| Catalyseur selon l'invention ajouté | Fonctionnalisation complète en |
|---|---|
| $[Zn(ND)_2(DBA)]$ 190 mg (0.35 mmol) | 1h |
| $[Zn(ND)_2(DBA)_2]$ 235 mg (0.35 mmol) | 1h |

**Revendications**

**1.** Composition comprenant:

- au moins un composé organosilicié **A** comprenant au moins deux groupements hydrolysables et condensables, identiques ou différents, ou au moins deux fonctions silanol $\equiv$SiOH,
- au moins un agent de réticulation **B,**
- éventuellement au moins une charge **C,** et
- une quantité catalytiquement efficace d'au moins un catalyseur de polycondensation **M** qui est un complexe de zinc comprenant dans sa structure deux types de ligand: carboxylate et amine.

**2.** Composition selon la revendication 1 dans laquelle le(s) catalyseur(s) de polycondensation **M** est (sont) susceptible(s) d'être obtenu(s) :

a) en faisant réagir pour 1 mole d'au moins un dicarboxylate de zinc de formule $[Zn(carboxylate)_2]$ ou d'un mélange de deux dicarboxylates de zinc distincts $\mathbf{X^1}$ mole d'amine ou d'un mélange d'amines éventuellement en présence d'un solvant, de manière à obtenir un produit de réaction comprenant :

- x mole d'un complexe de zinc **A** qui est un complexe $[Zn(carboxylate)_2(amine)]$,
- y mole d'un complexe de zinc **B** qui est un complexe $[Zn(carboxylate)_2(amine)_2]$,
- avec $x \geq 0$, $y \geq 0$,
- éventuellement $\mathbf{X^3}$ mole du dicarboxylate de zinc n'ayant pas réagi, et
- éventuellement $\mathbf{X^4}$ mole d'amine résiduelle n'ayant pas réagi, et

b) après éventuellement élimination du solvant et de l'amine résiduelle, on récupère le(s) catalyseur(s) de polycondensation **M** sous la forme d'au moins un complexe de zinc **A,** d'au moins un complexe de zinc **B** ou d'un mélange de complexe de zinc **A** et de complexe de zinc **B,** avec éventuellement une quantité résiduelle de $\mathbf{X^3}$ mole du complexe $[Zn(carboxylate)_2]$, et

- les symboles **$X^1$, $X^3$** et **$X^4$** sont des nombres et la somme x+y+ **$X^3$**=1

**3.** Composition selon l'une quelconques des revendications précédentes comprenant:

- au moins un composé organosilicié **A** comprenant au moins deux groupements hydrolysables et condensables, identiques ou différent, ou au moins deux fonctions silanol ≡SiOH,
- au moins un agent de réticulation **B,**
- éventuellement au moins une charge **C,** et
- une quantité catalytiquement efficace d'au moins un catalyseur de polycondensation **M** qui est un complexe de formule **(1)** suivante:

$$[Zn(C^1)_{n'}(C^2)_{n''}(L^1)_{y'}(L^2)_{y''}(X)_{x'}]_{z'}\cdot(H_2O)_{x''} \qquad \textbf{(1)}$$

dans laquelle:

- les symboles $C^1$ et $C^2$ sont des ligands, identiques ou différents, choisis dans le groupe des carboxylates,
- les symboles n' et n" représentent le nombre de ligands carboxylates et sont des nombres entiers égaux à 0, 1 ou 2 avec la condition que la somme n'+n" = 2,
- les symboles $L^1$ et $L^2$ sont des ligands, identiques ou différents, choisis dans le groupe des amines,
- les symboles y' et y" représentent le nombre de ligands amines et sont des nombres entiers égaux à 0, 1 ou 2 avec la condition que la somme y'+y"= 1 ou 2,
- le symbole X est un ligand différent de $C^1$, $C^2$, $L^1$ et $L^2$ et de préférence un ligand neutre autre qu'une amine et encore plus préférentiellement X est une molécule $H_20$,
- le symbole x'≥0, et de préférence x' = 0, 1, 2, 3 ou 4,
- le symbole x"≥0, et de préférence x"= 0, 1, 2, 3 ou 4, et
- le symbole z' est un nombre entier supérieur ou égal à 1, et de préférence z'=1 ou 2.

**4.** Composition selon l'une quelconques des revendications précédentes dans laquelle le catalyseur de polycondensation **M** est un complexe de formule **(2)** suivante:

$$[Zn(C^1)_{n'}(C^2)_{n''}(L^1)_{y'}(L^2)_{y''}]_{z'} \qquad \textbf{(2)}$$

dans laquelle:

- les symboles $C^1$ et $C^2$ sont des ligands, identiques ou différents, choisis dans le groupe des carboxylates,
- les symboles n' et n" représentent le nombre de ligand carboxylate et sont des nombres entier égaux à 0, 1 ou 2 avec la condition que la somme n'+n"=2,
- les symboles $L^1$ et $L^2$ sont des ligands, identiques ou différents, choisis dans le groupe des amines,
- les symboles y' et y" représentent le nombre de ligands amines et sont des nombres entiers égaux à 0, 1 ou 2 avec la condition que la somme y'+y"= 1 ou 2, et
- le symbole z' est un nombre entier supérieur ou égal à 1, et de préférence z'=1 ou 2 et encore plus préférentiellement z'=1.

**5.** Composition selon l'une quelconques des revendications précédentes laquelle le catalyseur de polycondensation **M** est un complexe de formule **(3)** suivante:

$$[Zn(C^1)_2(L^1)_{y'}]_{z'} \qquad \textbf{(3)}$$

dans laquelle:

- le symbole $C^1$ est un ligand choisi dans le groupe des carboxylates,
- le symbole $L^1$ set un ligand choisi dans le groupe des amines,
- le symbole y' est un nombre égal à 1 ou 2, et
- le symbole z' est un nombre entier supérieur ou égal à 1, et de préférence le symbole z'=1, 2, 3 ou 4, et encore plus préférentiellement z'=1 ou 2.

**6.** Composition selon l'une quelconques des revendications 3 à 5 dans laquelle le ligand de type amine $L^1$ ou $L^2$ est choisi parmi le groupe constitué par: les monoamines primaires de type alkylamine ayant au total de 1 à 40 atomes

de carbone pour le radical alkyle, les monoamines secondaires de type dialkylamine ayant au total de 2 à 40 atomes de carbone pour les radicaux alkyles, les monoamines tertiaires de type trialkylamine ayant au total de 3 à 60 atomes de carbone pour les radicaux alkyles, les diamines alkylées ayant au total de 1 à 40 atomes de carbones pour les radicaux alkyles et les silanes aminés, et encore plus préférentiellement les ligands $L^1$ et $L^2$ sont choisis parmi le groupe constitué par les monoamines secondaires de type dialkylamine ayant au total de 2 à 20 atomes de carbone et les monoamines primaires de type alkylamine ayant au total de 1 à 40 atomes de carbone pour le radical alkyle.

**7.** Composition selon l'une quelconques des revendications 3 à 5 dans laquelle le ligand de type amine $L^1$ ou $L^2$ est choisi parmi le groupe constitué par les amines: N,N-diméthyléthylènediamine, N,N'-diméthyléthylènediamine, N,N,N'-triméthyléthylènediamine, N,N'-diisopropyléthylènediamine, n-butylamine, n-propylamine, n-heptylamine, n-octylamine, n-nonylamime, tert-butylamine, isopropylamine, 2-éthylhexylamine, décylamine, dodécylamine linéaires ou ramifiées, N-méthyl-N-butylamine, N,N-dipropylamine, N,N- diisopropylamine, N-éthyl-N-butylamine, N,N-dibutylamine, N,N-diméthyl-N-butylamine, di(n-octyl)amine, N-n-propyléthylènediamine, , N,N,N',N'-tétraméthyléthylènediamine, 3-aminopropyltriméthoxysilane et 3-aminopropylméthyldiéthoxysilane.

**8.** Composition selon l'une quelconques des revendications 3, 4 ou 5 dans laquelle le ligand de type carboxylate $C^1$ ou $C^2$ est choisi parmi le groupe constitué par les carboxylates de formule brute $[C_{10}H_{19}O_2]^-$.

**9.** Composition selon l'une quelconques des revendications précédentes dans laquelle le catalyseur de polycondensation **M** est un complexe de formule **(3)** suivante:

$$[Zn(C^1)_2(L^1)_{y'}]_{z'} \qquad \textbf{(3')}$$

dans laquelle:

- le symbole $C^1$ est un ligand néodécanoate, naphténate ou un ligand 2-éthylhexanoate,
- le symbole L' est un ligand choisi dans le groupe constitué par les composés: N,N-diméthyléthylènediamine, N,N'-diméthyléthylènediamine, N,N,N'-triméthyléthylènediamine, N,N'-diisopropyléthylènediamine, n-butylamine, n-propylamine, n-heptylamine, n-octylamine, n-nonylamime, tert-butylamine, isopropylamine, 2-éthylhexylamine, décylamine, dodécylamine linéaires ou ramifiées, N-méthyl-N-butylamine, N,N-dipropylamine, N,N-diisopropylamine, N-éthyl-N-butylamine, N,N-dibutylamine, N,N-diméthyl-N-butylamine, di(n-octyl)amine, N-n-propyléthylènediamine, N,N'-diméthyléthylènediamine, N,N,N',N'-tétraméthyléthylènediamine, 3-aminopropyltriméthoxysilane et 3-aminopropylméthyldiéthoxysilane.
- le symbole y' est un nombre entier égal à 1 ou 2, et
- le symbole z'=1, 2, 3 ou 4 et de préférence z'=1 ou 2.

**10.** Composition selon l'une quelconques des revendications précédentes dans laquelle le catalyseur de polycondensation **M** est un complexe choisi parmi le groupe constitué par les complexes suivants :

- $[Zn(naphténate)_2(bis(2\text{-éthylhexyl})amine)]$,
- $[Zn(naphténate)_2(bis(2\text{-éthylhexyl})amine)_2]$,
- $[Zn(naphténate)_2(diisononylamine)]$,
- $[Zn(naphténate)_2(diisononylamine)_2]$,
- $[Zn(naphténate)_2(di(n\text{-octyl})amine)]$,
- $[Zn(naphténate)_2(di(n\text{-octyl})amine)_2]$,
- $[Zn(naphténate)_2(n\text{-octylamine})]$,
- $[Zn(naphténate)_2(n\text{-octylamine})_2]$,
- $[Zn(naphténate)_2(N,N\text{-dibutylamine})]$,
- $[Zn(naphténate)_2(N,N\text{-dibutylamine})_2]$,
- $[Zn(naphténate)_2(N,N\text{-diméthyl-N-butylamine})_2]$,
- $[Zn(naphténate)_2(N,N\text{-diméthyl-N-butylamine})_2]$,
- $[Zn(naphténate)_2(aminoéthyl\text{-}aminopropyltriméthoxysilane)]$,
- $[Zn(naphténate)_2(aminoéthyl\text{-}aminopropyltriméthoxysilane)_2]$,
- $[Zn(naphténate)_2(aminopropyltriéthoxysilane)]$,
- $[Zn(naphténate)_2(aminopropyltriéthoxysilane)_2]$,
- $[Zn(néodécanoate)_2(di(n\text{-octyl})amine)]$ ;
- $[Zn(néodécanoate)_2(di(n\text{-octyl})amine)]_2]$,
- $[Zn(néodécanoate)_2(n\text{-octylamine})]$,

- [Zn(néodécanoate)$_2$(n-octylamine)$_2$],
- [Zn(néodécanoate)$_2$(N,N-dibutylamine)],
- [Zn(néodécanoate)$_2$(N,N-dibutylamine)$_2$],
- [Zn(néodécanoate)$_2$(3-aminopropyltriméthoxysilane)$_2$],
- [Zn(néodécanoate)$_2$(3-aminopropylméthyldiéthoxysilane)$_2$],
- [Zn(néodécanoate)$_2$(aminoéthyl-aminopropyltriméthoxysilane)],
- [Zn(néodécanoate)$_2$(aminoéthyl-aminopropyltriméthoxysilane)$_2$],
- [Zn(néodécanoate)$_2$(aminopropyltriéthoxysilane)],
- [Zn(néodécanoate)$_2$(aminopropyltriéthoxysilane)$_2$],
- [Zn(néodécanoate)$_2$(bis(2-éthylhexyl)amine)],
- [Zn(néodécanoate)$_2$(bis(2-éthylhexyl)amine)$_2$],
- [Zn(néodécanoate)$_2$(diisonpnylamine)],
- [Zn(néodécanoate)$_2$(diisononylamine)$_2$],
- [Zn(2-éthylhexanoate)$_2$(N,N-dibutylamine)]
- [Zn(2-éthylhexanoate)$_2$(N,N-dibutylamine)$_2$],
- [Zn(2-éthylhexanoate)$_2$(n-octylamine)],
- [Zn(2-éthylhexanoate)$_2$(n-octylamine)$_2$],
- [Zn(2-éthylhexanoate)$_2$(bis(2-éthylhexyl)amine)],
- [Zn(2-éthylhexanoate)$_2$(bis(2-éthylhexyl)amine)$_2$],
- [Zn(2-éthylhexanoate)$_2$(diisononylamine)],
- [Zn(2-éthylhexanoate)$_2$(diisononylamine)$_2$]et
- leurs mélanges.

**11.** Composition selon la revendication 1 dans laquelle le composé organosilicié **A** est un polyorganosiloxane comprenant:

**(i)** au moins deux motifs siloxyles de formule **(4)** suivante:

$$R^1_a Z_b SiO_{\left(\frac{4-(a+b)}{2}\right)}$$

**(4)**

dans laquelle:

- les symboles $R^1$, identiques ou différents, représentent des radicaux hydrocarbonés monovalents en $C_1$ à $C_{30}$,
- les symboles Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy, iminoxi, cétiminoxy et énoxy,
- a est égal à 0, 1 ou 2, b est égal à 1, 2 ou 3, la somme a + b est égale à 1, 2 ou 3, et éventuellement

(ii) un ou plusieurs motif(s) siloxyle(s) de formule **(5)** suivante :

$$R_c SiO_{\left(\frac{4-c}{2}\right)}$$

**(5)**

dans laquelle:

- les symboles R, identiques ou différents, représentent des radicaux hydrocarbonés monovalent en $C_1$ à $C_{30}$ éventuellement substitués par un ou plusieurs atomes d'halogène ou par des groupements : amino, éther, ester, époxy, mercapto ou cyano, et

- le symbole c est égal à 0, 1, 2 ou 3.

**12.** Composition selon la revendication 1 dans laquelle l'agent de réticulation **B** est de préférence un composé de silicium dont chaque molécule comprend au moins trois groupements hydrolysables et condensables **Y** et ledit agent de réticulation **B** ayant la formule **(7)** suivante:

$$R'_{(4-a)}SiY_a \qquad \textbf{(7)}$$

formule dans laquelle :

- le symbole R' est un radical hydrocarboné monovalent comprenant de 1 à 30 atomes de carbone,
- le symbole Y est un groupement alcoxy, alcoxy-alkylène-oxy, amino, amido, acylamino, aminoxy, iminoxy, cétiminoxy, acyloxy et énoxy et de préférence Y est un groupement alcoxy, acyloxy, énoxy, cétiminoxy ou oxime,
- le symbole a = 3 ou 4.

**13.** Composition selon l'une quelconques des revendications 1 à 12 ne contenant pas de catalyseur ayant dans sa structure au moins un atome d'étain.

**14.** Composition selon l'une quelconques des revendications 1 à 13 dans laquelle le catalyseur de polycondensation **M** est le seul catalyseur de polycondensation présent dans ladite composition qui peut éventuellement contenir au moins un catalyseur de fonctionnalisation.

**15.** Composition bi-composante RTV-2, précurseur de la composition telle que définie selon l'une quelconque des revendications 1 à 14, se présentant en deux emballages distincts **P1** et **P2 caractérisé en ce que** :

- l'emballage **P1** qui est étanche à l'air et comprend:

  - une quantité catalytiquement efficace d'au moins un catalyseur de polycondensation **M** tel que défini selon l'une quelconque des revendications 1 à 10, et
  - au moins un agent de réticulation **B** et de préférence tel que défini selon la revendication 12, et

- l'emballage **P2** ne contient pas ledit catalyseur de polycondensation **M** et ledit agent de réticulation **B** et comprend :

  - pour 100 parties en poids d'au moins un composé organosilicié **A** tel que défini selon la revendication 1 ou 11, et
  - de 0 à 10 partie(s) en poids d'eau.

**16.** Composition bi-composante RTV-2 pour application moulage, précurseur de la composition telle que définie selon l'une quelconque des revendications 1 à 14, se présentant en deux emballages distincts **P1** et **P2 caractérisé en ce que** :

- l'emballage **P1** est étanche à l'air et comprend:

  - une quantité catalytiquement efficace d'au moins un catalyseur de polycondensation **M** tel que défini selon l'une quelconque des revendications 1 à 10, et
  - au moins un agent de réticulation **B** et de préférence tel que défini selon la revendication 12, et

- l'emballage **P2** ne contient pas ledit catalyseur de polycondensation **M** et ledit agent de réticulation **B** et comprend :

  - pour 100 parties en poids d'au moins un composé organosilicié **A** qui est un polydiméthylsiloxane $\alpha,\omega$-dihydroxylée dont la viscosité dynamique à 25°C est comprise entre 2000 mPa.s et 5000 mPa.s et de préférence entre 3000 mPa.s et 4000 mPa., et
  - de 0 à 10 partie(s) en poids d'eau.

**17.** Composition mono-composante RTV-1 se présentant en un seul emballage **P** étanche à l'air et comprenant:

a) au moins un composé organosilicié **A** comprenant au moins deux groupements hydrolysables et condensables, identiques ou différent, ou au moins deux fonctions silanol ≡SiOH et de préférence tel que défini selon la revendication 11,
b) au moins un agent de réticulation **B** et de préférence tel que défini selon la revendication 12, et
c) une quantité catalytiquement efficace d'au moins un catalyseur de polycondensation **M** tel que défini selon l'une quelconque des revendications 1 à 10, et
d) éventuellement au moins une charge **C.**

**18.** Elastomère obtenu :

- après avoir mélangé le contenu des emballages **P1** et **P2** de la composition bi-composante RTV-2 telle que défini selon la revendication 15 ou 16 et laissé durcir le mélange,
- après avoir mise en contact avec l'humidité de l'air le contenu de l'emballage **P** de la composition monocomposante RTV-1 telle que décrite selon la revendication 18 et laissé durcir ledit contenu, ou
- après avoir préparé la composition telle que décrite selon l'une quelconque des revendications 1 à 14 ou 16 et laissé durcir le mélange en présence d'eau ou d'humidité de l'air.

**19.** Procédé d'enduction de la composition selon l'invention et telle que définie selon l'une quelconque des revendications 1 à 17 sur un support souple **S** qui est en textile, en papier, en polychlorure de vinyle, en polyester, en polypropylène, en polyamide ; en polyéthylène ; en polyuréthanne ou en polyéthylène téréphtalate comprenant les étapes a), b) et c) suivantes :

a) on prépare une composition selon l'invention et telle que définie selon l'une quelconque des revendications 1 à 14,
b) puis on dépose de manière continue ou discontinue ladite composition sur ledit support souple **S,** et
c) on laisse réticuler ladite composition silicone en présence d'humidité apportée par l'air ambiant ou par addition préalable d'eau de manière à former un élastomère silicone.

**20.** Utilisation d'un catalyseur de polycondensation **M** tel que défini selon l'une quelconque des revendications 1 à 10 comme catalyseur de la réaction de polycondensation de composé de silicium comprenant au moins deux groupements hydrolysables et condensables, identiques ou différent, ou au moins deux fonctions silanol ≡SiOH.

**21.** Complexes de formule suivante :

- [Zn(naphténate)$_2$(bis(2-éthylhexyl)amine)],
- [Zn(naphténate)$_2$(bis(2-éthylhexyl)amine)$_2$],
- [Zn(naphténate)$_2$(diisononylamine)],
- [Zn(naphténate)$_2$(diisononylamine)$_2$],
- [Zn(naphténate)$_2$(di(n-octyl)amine)],
- [Zn(naphténate)$_2$(di(n-octyl)amine)$_2$],
- [Zn(naphténate)$_2$(n-octylamine)],
- [Zn(naphténate)$_2$(n-octylamine)$_2$],
- [Zn(naphténate)$_2$(N,N-dibutylamine)],
- [Zn(naphténate)$_2$(N,N-dibutylamine)$_2$],
- [Zn(naphténate)$_2$(N,N-diméthyl-N-butylamine)$_2$],
- [Zn(naphténate)$_2$(N,N-diméthyl-N-butylamine)$_2$],
- [Zn(naphténate)$_2$(aminoéthyl-aminopropyltriméthoxysilane)],
- [Zn(naphténate)$_2$(aminoéthyl-aminopropyltriméthoxysilane)$_2$],
- [Zn(naphténate)$_2$(aminopropyltriéthoxysilane)],
- [Zn(naphténate)$_2$(aminopropyltriéthoxysilane)$_2$],
- [Zn(néodécanoate)$_2$(di(n-octyl)amine)] ;
- [Zn(néodécanoate)$_2$(di(n-octyl)amine)]$_2$],
- [Zn(néodécanoate)$_2$(n-octylamine)],
- [Zn(néodécanoate)$_2$(n-octylamine)$_2$],
- [Zn(néodécanoate)$_2$(N,N-dibutylamine)],
- [Zn(néodécanoate)$_2$(N,N-dibutylamine)$_2$],
- [Zn(néodécanoate)$_2$(3-aminopropyltriméthoxysilane)$_2$],
- [Zn(néodécanoate)$_2$(3-aminopropylméthyldiéthoxysilane)$_2$],

- [Zn(néodécanoate)$_2$(aminoéthyl-aminopropyltriméthoxysilane)],
- [Zn(néodécanoate)$_2$(aminoéthyl-aminopropyltriméthoxysilane)$_2$],
- [Zn(néodécanoate)$_2$(aminopropyltriéthoxysilane)],
- [Zn(néodécanoate)$_2$(aminopropyltriethoxysitane)$_2$],
- [Zn(néodécanoate)$_2$(bis(2-éthylhexyl)amine)],
- [Zn(néodécanoate)$_2$(bis(2-éthylhexyl)amine)$_2$],
- [Zn(néodécanoate)$_2$(diisononylamine)],
- [Zn(néodécanoate)$_2$(diisononylamine)$_2$],
- [Zn(2-éthylhexanoate)$_2$(N,N-dibutylamine)]
- [Zn(2-éthylhexanoate)$_2$(N,N-dibutylamine)$_2$],
- [Zn(2-éthylhexanoate)$_2$(n-octylamine)],
- [Zn(2-éthylhexanoate)$_2$(n-octylamine)$_2$],
- [Zn(2-éthylhexanoate)$_2$(bis(2-éthylhexyl)amine)],
- [Zn(2-éthylhexanoate)$_2$(bis(2-éthylhexyl)amine)$_2$],
- [Zn(2-éthylhexanoate)$_2$(diisononylamine)], et
- [Zn(2-éthylhexanoate)$_2$(diisononylamine)$_2$].

## Patentansprüche

1. Zusammensetzung, umfassend:

   - mindestens eine Organosiliciumverbindung **A** mit mindestens zwei gleichen oder verschiedenen hydrolysierbaren und kondensierbaren Gruppen oder mindestens zwei Silanolfunktionen ≡SiOH,
   - mindestens ein Vernetzungsmittel **B,**
   - gegebenenfalls mindestens einen Füllstoff **C** und
   - eine katalytisch wirksame Menge mindestens eines Polykondensationskatalysators **M,** bei dem es sich um einen Zinkkomplex handelt, der in seiner Struktur zwei Ligandentypen, nämlich Carboxylat und Amin, umfasst.

2. Zusammensetzung nach Anspruch 1, wobei der Polykondensationskatalysator bzw. die Polykondensationskatalysatoren erhältlich ist bzw. sind:

   a) durch Umsetzen von $\mathbf{X^1}$ mol Amin oder Amin-Mischung pro 1 mol mindestens eines Zinkdicarboxylats der Formel [Zn(Carboxylat)$_2$] oder einer Mischung von zwei verschiedenen Zinkdicarboxylaten, gegebenenfalls in Gegenwart eines Lösungsmittels, zum Erhalt eines Reaktionsprodukts, umfassend:

   - x mol eines Zinkkomplexes **A,** bei dem es sich um einen Komplex der Formel [(Zn(Carboxylat)$_2$(Amin)] handelt,
   - y mol eines Zinkkomplexes **B,** bei dem es sich um einen Komplex der Formel [(Zn(Carboxylat)$_2$)(Amin)$_2$] handelt,
   - wobei $x \geq 0$, $y \geq 0$,
   - gegebenenfalls $\mathbf{X^3}$ mol nicht umgesetztes Zinkdicarboxylat und
   - gegebenenfalls $\mathbf{X^4}$ mol restliches nicht umgesetztes Amin, und

   b) gegebenenfalls nach Entfernung des Lösungsmittels und des restlichen Amins Gewinnen des Polykondensationskatalysators bzw. der Polykondensationskatalysatoren **M** in Form von mindestens einem Zinkkomplex **A,** mindestens einem Zinkkomplex **B** oder einer Mischung von Zinkkomplex **A** und Zinkkomplex **B,** gegebenenfalls mit einer Restmenge von $\mathbf{X^3}$ mol des [Zn(Carboxylat)$_2$]-Komplexes, und

   - und die Symbole $\mathbf{X^1}$**,** $\mathbf{X^3}$ und $\mathbf{X^4}$ für Zahlen stehen und die Summe $x + y + \mathbf{X^3} = 1$.

3. Zusammensetzung nach einem der vorhergehenden Ansprüche, umfassend:

   - mindestens eine Organosiliciumverbindung **A** mit mindestens zwei gleichen oder verschiedenen hydrolysierbaren und kondensierbaren Gruppen oder mindestens zwei Silanolfunktionen =SiOH,
   - mindestens ein Vernetzungsmittel **B,**
   - gegebenenfalls mindestens einen Füllstoff **C** und
   - eine katalytisch wirksame Menge mindestens eines Polykondensationskatalysators **M,** bei dem es sich um

einen Komplex der folgenden Formel **(1)** handelt:

$$[Zn(C^1)_{n'}(C^2)_{n''}(L^1)_{y'}(L^2)_{y''}(x)_{x'}]_{z'}.(H_2O)_{x''} \quad \textbf{(1)}$$

wobei:

- die Symbole $C^1$ und $C^2$ für gleiche oder verschiedene Liganden aus der Gruppe der Carboxylate stehen,
- die Symbole n' und n" für die Zahl der Carboxylat-Liganden stehen und für ganze Zahlen mit einem Wert von 0, 1 oder 2 stehen, mit der Maßgabe, dass die Summe n' + n" = 2,
- die Symbole $L^1$ und $L^2$ für gleiche oder verschiedene Liganden aus der Gruppe der Amine stehen,
- die Symbole y' und y" für die Zahl der Amin-Liganden stehen und für ganze Zahlen mit einem Wert von 0, 1 oder 2 stehen, mit der Maßgabe, dass die Summe y' + y" = 1 oder 2,
- das Symbol X für einen von $C^1$, $C^2$, $L^1$ und $L^2$ verschiedenen Liganden und vorzugsweise einen anderen neutralen Liganden als ein Amin und noch weiter bevorzugt für ein $H_2O$-Molekül steht,
- das Symbol x' ≥ 0 und vorzugsweise x' = 0, 1, 2, 3 oder 4,
- das Symbol x" ≥ 0 und vorzugsweise x" = 0, 1, 2, 3 oder 4 und
- das Symbol z' für eine ganze Zahl größer gleich 1 steht und vorzugsweise z' = 1 oder 2.

**4.** Zusammensetzung nach einem der vorhergehenden Ansprüche, wobei es sich bei dem Polykondensationskatalysator **M** um einen Komplex der folgenden Formel **(2)** handelt:

$$[Zn(C^1)_{n'}(C^2)_{n''}(L^1)_{y'}(L^2)_{y''}]_{z'} \quad \textbf{(2)}$$

wobei:

- die Symbole $C^1$ und $C^2$ für gleiche oder verschiedene Liganden aus der Gruppe der Carboxylate stehen,
- die Symbole n' und n" für die Zahl der Carboxylat-Liganden stehen und für ganze Zahlen mit einem Wert von 0, 1 oder 2 stehen, mit der Maßgabe, dass die Summe n' + n" = 2,
- die Symbole $L^1$ und $L^2$ für gleiche oder verschiedene Liganden aus der Gruppe der Amine stehen,
- die Symbole y' und y" für die Zahl der Amin-Liganden stehen und für ganze Zahlen mit einem Wert von 0, 1 oder 2 stehen, mit der Maßgabe, dass die Summe y' + y" = 1 oder 2, und
- das Symbol z' für eine ganze Zahl größer gleich 1 steht und vorzugsweise z' = 1 oder 2 und noch weiter bevorzugt z' = 1.

**5.** Zusammensetzung nach einem der vorhergehenden Ansprüche, wobei es sich bei dem Polykondensationskatalysator **M** um einen Komplex der folgenden Formel **(3)** handelt:

$$[Zn(C^1)_2(L^1)_{y'}]_{z'} \quad \textbf{(3)}$$

wobei:

- das Symbol $C^1$ für einen Liganden aus der Gruppe der Carboxylate steht,
- das Symbol $L^1$ für einen Liganden aus der Gruppe der Amine steht,
- das Symbol y' für eine ganze Zahl mit einem Wert von 1 oder 2 steht und
- das Symbol z' für eine ganze Zahl größer gleich 1 steht und vorzugsweise das Symbol z' = 1, 2, 3 oder 4 und noch weiter bevorzugt z' = 1 oder 2.

**6.** Zusammensetzung nach einem der Ansprüche 3 bis 5, wobei der Ligand vom Amin-Typ $L^1$ oder $L^2$ aus der Gruppe bestehend aus primären Monoaminen vom Alkylamin-Typ mit insgesamt 1 bis 40 Kohlenstoffatomen für den Alkylrest, sekundären Monoaminen vom Dialkylamin-Typ mit insgesamt 2 bis 40 Kohlenstoffatomen für die Alkylreste, tertiären Monoaminen vom Trialkylamin-Typ mit insgesamt 3 bis 60 Kohlenstoffatomen für die Alkylreste, Alkyldiaminen mit insgesamt 1 bis 40 Kohlenstoffatomen für die Alkylreste und Aminosilanen ausgewählt sind und noch weiter bevorzugt die Liganden $L^1$ und $L^2$ aus der Gruppe bestehend aus sekundären Monoaminen vom Dialkylamin-Typ mit insgesamt 2 bis 20 Kohlenstoffatomen und primären Monoaminen vom Alkylamin-Typ mit insgesamt 1 bis 40 Kohlenstoffatomen für den Alkylrest ausgewählt sind.

**7.** Zusammensetzung nach einem der Ansprüche 3 bis 5, wobei der Ligand vom Amin-Typ $L^1$ oder $L^2$ aus der Gruppe bestehend aus den folgenden Aminen ausgewählt ist: N,N-Dimethylethylendiamin, N,N'-Dimethylethylendiamin,

N,N,N'-Trimethylethylen-diamin, N,N'-Diisopropylethylendiamin, n-Butylamin, n-Propylamin, n-Heptylamin, n-Octylamin, n-Nonylamin, tert-Butylamin, Isopropylamin, 2-Ethylhexylamin, Decylamin, Dodecylamin, die linear oder verzweigt sein können, N-Methyl-N-butylamin, N,N-Dipropylamin, N,N-Diisopropylamin, N-Ethyl-N-butylamin, N,N-Dibutylamin, N,N-Dimethyl-N-butylamin, Di(n-octyl)amin, N-n-Propylethylendiamin, N,N,N',N'-Tetramethylethylendiamin, 3-Aminopropyltrimethoxysilan und 3-Aminopropylmethyldiethoxysilan.

**8.** Zusammensetzung nach einem der Ansprüche 3, 4 oder 5, wobei der Ligand von Carboxylat-Typ $C^1$ oder $C^2$ aus der Gruppe der Carboxylat mit der Summenformel $[C_{10}H_{19}O_2]^-$ ausgewählt ist.

**9.** Zusammensetzung nach einem der vorhergehenden Ansprüche, wobei es sich bei dem Polykondensationskatalysator **M** um einen Komplex der folgenden Formel **(3)** handelt:

$$[Zn(C^1)_2(L^1)_{y'}]_{z'} \qquad \textbf{(3')}$$

wobei:

- das Symbol $C^1$ für einen Neodecanoat-, Naphthenat- oder 2-Ethylhexanoat-Liganden steht,
- das Symbol $L^1$ für einen Liganden aus der Gruppe bestehend aus den folgenden Verbindungen steht: N,N-Dimethylethylendiamin, N,N'-Dimethylethylendiamin, N,N,N'-Trimethylethylen-diamin, N,N'-Diisopropylethylendiamin, n-Butylamin, n-Propylamin, n-Heptylamin, n-Octylamin, n-Nonylamin, tert-Butylamin, Isopropylamin, 2-Ethylhexylamin, Decylamin, Dodecylamin, die linear oder verzweigt sein können, N-Methyl-N-butylamin, N,N-Dipropylamin, N,N-Diisopropylamin, N-Ethyl-N-butylamin, N,N-Dibutylamin, N,N-Dimethyl-N-butylamin, Di(n-octyl)amin, N-n-Propylethylendiamin, N,N'-Dimethylethylendiamin, N,N,N',N'-Tetramethylethylendiamin, 3-Aminopropyltrimethoxysilan und 3-Aminopropylmethyldiethoxysilan,
- das Symbol y' für eine ganze Zahl mit einem Wert von 1 oder 2 steht und
- das Symbol z' = 1, 2, 3 oder 4 vorzugsweise z' = 1 oder 2,

**10.** Zusammensetzung nach einem der vorhergehenden Ansprüche, wobei es sich bei dem Polykondensationskatalysator **M** um einen Komplex handelt, der aus der Gruppe bestehend aus den folgenden Komplexen ausgewählt ist:

- [Zn(Naphthenat)$_2$(bis(2-ethylhexyl)amin)],
- [Zn(Naphthenat)$_2$(bis(2-ethylhexyl)amin)$_2$],
- [Zn(Naphthenat)$_2$(diisononylamin)],
- [Zn(Naphthenat)$_2$(diisononylamin)$_2$],
- [Zn(Naphthenat)$_2$(di(n-octyl)amin)],
- [Zn(Naphthenat)$_2$(di(n-octyl)amin)$_2$],
- [Zn(Naphthenat)$_2$(n-octylamin)],
- [Zn(Naphthenat)$_2$(n-octylamin)$_2$],
- [Zn(Naphthenat)$_2$(N,N-dibutylamin)],
- [Zn(Naphthenat)$_2$(N,N-dibutylamin)$_2$],
- [Zn(Naphthenat)$_2$(N,N-dimethyl-N-butylamin)$_2$],
- [Zn(Naphthenat)$_2$(N,N-dimethyl-N-butylamin)$_2$],
- [Zn(Naphthenat)$_2$(aminoethylaminopropyltrimethoxy-silan)],
- [Zn(Naphthenat)$_2$(aminoethylaminopropyltrimethoxysilan)$_2$],
- [Zn(Naphthenat)$_2$(aminopropyltriethoxysilan)],
- [Zn(Naphthenat)$_2$(aminopropyltriethoxysilan)$_2$],
- [Zn(Neodecanoat)$_2$(di(n-octyl)amin)],
- [Zn(Neodecanoat)$_2$(di(n-octyl)amin)]$_2$],
- [Zn(Neodecanoat)$_2$(n-octylamin)],
- [Zn(Neodecanoat)$_2$(n-octylamin)$_2$],
- [Zn(Neodecanoat)$_2$(N,N-dibutylamin)],
- [Zn(Neodecanoat)$_2$(N,N-dibutylamin)$_2$],
- [Zn(Neodecanoat)$_2$(3-aminopropyltrimethoxysilan)$_2$],
- [Zn(Neodecanoat)$_2$(3-aminopropylmethyldiethoxysilan)$_2$],
- [Zn(Neodecanoat)$_2$(aminoethylaminopropyl-trimethoxysilan)],
- [Zn(Neodecanoat)$_2$(aminoethylaminopropyl-trimethoxysilan)$_2$],
- [Zn(Neodecanoat)$_2$(aminopropyltriethoxysilan)],
- [Zn(Neodecanoat)$_2$(aminopropyltriethoxysilan)$_2$],

- [Zn(Neodecanoat)$_2$(bis(2-ethylhexyl)amin)],
- [Zn(Neodecanoat)$_2$(bis(2-ethylhexyl)amin)$_2$],
- [Zn(Neodecanoat)$_2$(diisononylamin)],
- [Zn(Neodecanoat)$_2$(diisononylamin)$_2$],
- [Zn(2-Ethylhexanoat)$_2$(N,N-dibutylamin)]
- [Zn(2-Ethylhexanoat)$_2$(N,N-dibutylamin)$_2$],
- [Zn(2-Ethylhexanoat)$_2$(n-octylamin)],
- [Zn(2-Ethylhexanoat)$_2$(n-octylamin)$_2$],
- [Zn(2-Ethylhexanoat)$_2$(bis(2-ethylhexyl)amin)],
- [Zn(2-Ethylhexanoat)$_2$(bis(2-ethylhexyl)amin)$_2$],
- [Zn(2-ethylhexanoat)$_2$(diisononylamin)],
- [Zn(2-Ethylhexanoat)$_2$(diisononylamin)$_2$] und
- Mischungen davon.

**11.** Zusammensetzung nach Anspruch 1, wobei es sich bei der Organosiliciumverbindung **A** um ein Polyorganosiloxan mit:

(i) mindestens zwei Siloxyleinheiten der folgenden Formel **(4):**

$$R^1_a Z_b SiO_{\left(\frac{4-(a+b)}{2}\right)}$$

**(4)**

wobei:

- die Symbole $R^1$ gleich oder verschieden sind und für einwertige $C_1$- bis $C_{30}$-Kohlenwasserstoffreste stehen,
- die Symbole Z gleich oder verschieden sind und jeweils für eine hydrolysierbare und kondensierbare Gruppe oder eine Hydroxygruppe stehen und vorzugsweise aus der Gruppe bestehend aus Gruppen des Typs Hydroxy, Alkoxy, Alkoxy-alkylen-oxy, Amino, Amido, Acylamino, Aminoxy, Iminoxy, Ketiminoxy, Acyloxy, Iminoxy, Ketiminoxy und Enoxy ausgewählt sind und noch weiter bevorzugt Z für eine Hydroxygruppe steht,
- a gleich 0, 1 oder 2 ist, b gleich 1, 2 oder 3 ist, die Summe a + b gleich 1, 2 oder 3 ist, und gegebenenfalls

(ii) einer oder mehreren Siloxyleinheiten der folgenden Formel **(5):**

$$R_c SiO_{\left(\frac{4-c}{2}\right)}$$

**(5)**

wobei:

- die Symbole R gleich oder verschieden sind und für einwertige $C_1$- bis $C_{30}$-Kohlenwasserstoffreste, die gegebenenfalls durch ein oder mehrere Halogenatome oder durch Amino-, Ether-, Ester-, Epoxid-, Mercapto- oder Cyanogruppen substituiert sind, stehen und
- das Symbol c gleich 0, 1, 2 oder 3 ist,

handelt.

**12.** Zusammensetzung nach Anspruch 1, wobei es sich bei dem Vernetzungsmittel **B** vorzugsweise um eine Siliciumverbindung handelt, bei der jedes Molekül mindestens drei hydrolysierbare und kondensierbare Gruppen **Y** umfasst, wobei das Vernetzungsmittel **B** die folgende Formel **(7)** aufweist:

$R'_{(4-a)}SiY_a$ **(7)**

in der:

- das Symbol R' für einen einwertigen Kohlenwasserstoffrest mit 1 bis 30 Kohlenstoffatomen steht,
- das Symbol Y für eine Alkoxy-, Alkoxy-alkylen-oxy-, Amino-, Amido-, Acylamino-, Aminoxy-, Iminoxy-, Ketiminoxy-, Acyloxy- und Enoxygruppe steht und Y vorzugsweise für eine Alkoxy-, Acyloxy-, Enoxy-, Ketiminoxy- oder Oximgruppe steht,
- das Symbol a = 3 oder 4.

**13.** Zusammensetzung nach einem der Ansprüche 1 bis 12, die keinen Katalysator mit mindestens einem Zinnatom in seiner Struktur aufweist.

**14.** Zusammensetzung nach einem der Ansprüche 1 bis 13, wobei es sich bei dem Polykondensationskatalysator **M** um den einzigen Polykondensationskatalysator in der Zusammensetzung, die gegebenenfalls mindestens einen Funktionalisierungskatalysator enthalten kann, handelt.

**15.** RTV-2-Zweikomponentenzusammensetzung, die eine Vorstufe der Zusammensetzung gemäß einem der Ansprüche 1 bis 14 darstellt und in zwei separaten Packungen **P1** und **P2** vorliegt, **dadurch gekennzeichnet, dass**:

- die Packung **P1** luftdicht ist und Folgendes umfasst:

  - eine katalytisch wirksame Menge mindestens eines Polykondensationskatalysators **M** gemäß einem der Ansprüche 1 bis 10 und
  - mindestens ein Vernetzungsmittel **B,** vorzugsweise gemäß Anspruch 12, und

- die Packung **P2** weder den Polykondensationskatalysator **M** noch das Vernetzungsmittel B enthält und Folgendes umfasst:

  - pro 100 Gewichtsteile mindestens eine Organosiliciumverbindung **A** gemäß Anspruch 1 oder 11 und
  - 0 bis 10 Gewichtsteile Wasser.

**16.** RTV-2-Zweikomponentenzusammensetzung zur Anwendung beim Abformen, die eine Vorstufe der Zusammensetzung gemäß einem der Ansprüche 1 bis 14 darstellt und in zwei separaten Packungen **P1** und **P2** vorliegt, **dadurch gekennzeichnet, dass**:

- die Packung **P1** luftdicht ist und Folgendes umfasst:

  - eine katalytisch wirksame Menge mindestens eines Polykondensationskatalysators **M** gemäß einem der Ansprüche 1 bis 10 und
  - mindestens ein Vernetzungsmittel **B,** vorzugsweise gemäß Anspruch 12, und

- die Packung **P2** weder den Polykondensationskatalysator **M** noch das Vernetzungsmittel **B** enthält und Folgendes umfasst:

  - pro 100 Gewichtsteile mindestens eine Organosiliciumverbindung **A,** bei der es sich um ein $\alpha,\omega$-Dihydroxypolydimethylsiloxan mit einer dynamischen Viskosität bei 25 °C zwischen 2000 mPa.s und 5000 mPa.s und vorzugsweise zwischen 3000 mPa.s und 4000 mPa.s handelt, und
  - 0 bis 10 Gewichtsteile Wasser.

**17.** RTV-1-Einkomponentenzusammensetzung, die in einer einzigen luftdichten Verpackung **P** verpackt ist und Folgendes umfasst:

a) mindestens eine Organosiliciumverbindung **A** mit mindestens zwei gleichen oder verschiedenen hydrolysierbaren und kondensierbaren Gruppen oder mindestens zwei Silanolfunktionen ≡SiOH, vorzugsweise gemäß Anspruch 11,
b) mindestens ein Vernetzungsmittel **B,** vorzugsweise gemäß Anspruch 12, und
c) eine katalytisch wirksame Menge mindestens eines Polykondensationskatalysators **M** gemäß einem der Ansprüche 1 bis 10 und
d) gegebenenfalls mindestens einen Füllstoff **C.**

**18.** Elastomer, erhalten:

- nach Mischen des Inhalts der Packungen **P1** und **P2** der RTV-2-Zweikomponentenzusammensetzung gemäß Anspruch 15 oder 16 und Härtenlassen der Mischung,
- nach Inkontaktbringen des Inhalts der Packung **P** der RTV-1-Einkomponentenzusammensetzung gemäß Anspruch 18 mit Luftfeuchtigkeit und Härtenlassen des Inhalts, oder
- nach Herstellen der Zusammensetzung gemäß einem der Ansprüche 1 bis 14 oder 16 und Härtenlassen der Mischung in Gegenwart von Wasser oder Luftfeuchtigkeit.

**19.** Verfahren zum Auftragen der Erfindung gemessen Zusammensetzung gemäß obiger Definition nach einem der Ansprüche 1 bis 17 auf einen flexiblen Träger **S** aus Textil, Papier, Polyvinylchlorid, Polyester, Polypropylen, Polyamid, Polyethylen, Polyurethan oder Polyethylenterephthalat, das die folgenden Schritte a), b) und c) umfasst:

a) man stellt eine erfindungsgemäße Zusammensetzung gemäß einem der Ansprüche 1 bis 14 her,
b) dann bringt man die Zusammensetzung kontinuierlich oder diskontinuierlich auf den flexiblen Träger **S** auf, und
c) man lässt die Silikonzusammensetzung in Gegenwart von Feuchtigkeit, die durch die Umgebungsluft oder durch vorherige Zugabe von Wasser bereitgestellt wird, zu einem Silikonelastomer härten.

**20.** Verwendung eines Polykondensationskatalysators **M** gemäß einem der Ansprüche 1 bis 10 als Katalysator für die Polykondensationsreaktion einer Siliciumverbindung mit mindestens zwei gleichen oder verschiedenen hydrolysierbaren und kondensierbaren Gruppen oder mindestens zwei Silanolfunktionen ≡SiOH.

**21.** Komplexe der folgenden Formel:

- [Zn(Naphthenat)$_2$(bis(2-ethylhexyl)amin)],
- [Zn(Naphthenat)$_2$(bis(2-ethylhexyl)amin)$_2$],
- [Zn(Naphthenat)$_2$(diisononylamin)],
- [Zn(Naphthenat)$_2$(diisononylamin)$_2$],
- [Zn(Naphthenat)$_2$(di(n-octyl)amin)],
- [Zn(Naphthenat)$_2$(di(n-octyl)amin)$_2$],
- [Zn(Naphthenat)$_2$(n-octylamin)],
- [Zn(Naphthenat)$_2$(n-octylamin)$_2$],
- [Zn(Naphthenat)$_2$(N,N-dibutylamin)],
- [Zn(Naphthenat)$_2$(N,N-dibutylamin)$_2$],
- [Zn(Naphthenat)$_2$(N,N-dimethyl-N-butylamin)$_2$],
- [Zn(Naphthenat)$_2$(N,N-dimethyl-N-butylamin)$_2$],
- [Zn(Naphthenat)$_2$(aminoethylaminopropyltrimethoxysilan)],
- [Zn(Naphthenat)$_2$(aminoethylaminopropyltrimethoxysilan)$_2$],
- [Zn(Naphthenat)$_2$(aminopropyltriethoxysilan)],
- [Zn(Naphthenat)$_2$(aminopropyltriethoxysilan)$_2$],
- [Zn(Neodecanoat)$_2$(di(n-octyl)amin)],
- [Zn(Neodecanoat)$_2$(di(n-octyl)amin)]$_2$],
- [Zn(Neodecanoat)$_2$(n-octylamin)],
- [Zn(Neodecanoat)$_2$(n-octylamin)$_2$],
- [Zn(Neodecanoat)$_2$(N,N-dibutylamin)],
- [Zn(Neodecanoat)$_2$(N,N-dibutylamin)$_2$],
- [Zn(Neodecanoat)$_2$(3-aminopropyltrimethoxysilan)$_2$],
- [Zn(Neodecanoat)$_2$(3-aminopropylmethyldiethoxysilan)$_2$],
- [Zn(Neodecanoat)$_2$(aminoethylaminopropyltrimethoxysilan)],
- [Zn(Neodecanoat)$_2$(aminoethylaminopropyltrimethoxysilan)$_2$],
- [Zn(Neodecanoat)$_2$(aminopropyltriethoxysilan)],
- [Zn(Neodecanoat)$_2$(aminopropyltriethoxysilan)$_2$],
- [Zn(Neodecanoat)$_2$(bis(2-ethylhexyl)amin)],
- [Zn(Neodecanoat)$_2$(bis(2-ethylhexyl)amin)$_2$],
- [Zn(Neodecanoat)$_2$(diisononylamin)],
- [Zn(Neodecanoat)$_2$(diisononylamin)$_2$],
- [Zn(2-Ethylhexanoat)$_2$(N,N-dibutylamin)]
- [Zn(2-Ethylhexanoat)$_2$(N,N-dibutylamin)$_2$],

- [Zn(2-Ethylhexanoat)$_2$(n-octylamin)],
- [Zn(2-Ethylhexanoat)$_2$(n-octylamin)$_2$],
- [Zn(2-Ethylhexanoat)$_2$(bis(2-ethylhexyl)amin)],
- [Zn(2-Ethylhexanoat)$_2$(bis(2-ethylhexyl)amin)$_2$],
- [Zn(2-ethylhexanoat)$_2$(diisononylamin)] und
- [Zn(2-Ethylhexanoat)$_2$(diisononylamin)$_2$].

## Claims

**1.** Composition comprising:

- at least one organosilicon compound **A** comprising at least two identical or different hydrolyzable and condensable groups, or at least two silanol functions ≡SiOH,
- at least one crosslinking agent B,
- optionally at least one filler C, and
- a catalytically effective amount of at least one polycondensation catalyst **M** which is a zinc complex comprising in its structure two types of ligand: carboxylate and amine.

**2.** Composition according to Claim 1, in which the polycondensation catalyst(s) **M** may be obtained:

a) by reacting per 1 mol of at least one zinc dicarboxylate of formula [Zn(carboxylate)$_2$] or of a mixture of two different zinc dicarboxylates $\mathbf{X^1}$ mol of amine or a mixture of amines optionally in the presence of a solvent, so as to obtain a reaction product comprising:

- x mol of a zinc complex **A** which is a [(Zn(carboxylate)$_2$(amine)] complex,
- y mol of a zinc complex **B** which is a [(Zn(carboxylate)$_2$(amine)$_2$] complex,
- with $x \geq 0$, $y \geq 0$,
- optionally $\mathbf{X^3}$ mol of unreacted zinc dicarboxylate, and
- optionally $\mathbf{X^4}$ mol of residual unreacted amine, and

b) after optionally removing the solvent and the residual amine, the polycondensation catalyst(s) **M** are recovered in the form of at least one zinc complex **A,** at least one zinc complex **B** or a mixture of zinc complex **A** and of zinc complex **B,** with optionally a residual amount of $\mathbf{X^3}$ mol of the complex [Zn(carboxylate)$_2$], and

- the symbols $\mathbf{X^1}$**,** $\mathbf{X^3}$ and $\mathbf{X^4}$ are numbers and the sum $x+y+\mathbf{X^3}=1$.

**3.** Composition according to either of the preceding claims, comprising:

- at least one organosilicon compound **A** comprising at least two identical or different hydrolyzable and condensable groups, or at least two silanol functions ≡SiOH,
- at least one crosslinking agent **B,**
- optionally at least one filler **C,** and

- a catalytically effective amount of at least one polycondensation catalyst **M** which is a complex of formula **(1)** below:

$$[Zn(C^1)_{n'}(C^2)_{n''}(L^1)_{y'}(L^2)_{y''}(X)_{x'}]_{z'}\cdot(H_2O)_{x''} \qquad \mathbf{(1)}$$

in which:

- the symbols $C^1$ and $C^2$ are identical or different ligands chosen from the group of carboxylates,
- the symbols n' and n" represent the number of carboxylate ligands and are integers equal to 0, 1 or 2 with the condition that the sum n'+ n"= 2,
- the symbols $L^1$ and $L^2$ are identical or different ligands chosen from the group of amines,
- the symbols y' and y" represent the number of amine ligands and are integers equal to 0, 1 or 2 with the condition that the sum y'+ y"= 1 or 2,
- the symbol X is a ligand other than $C^1$, $C^2$, $L^1$ and $L^2$ and preferably a neutral ligand other than an

amine and even more preferentially X is an $H_2O$ molecule,
- the symbol $x' \geq 0$, and preferably x' = 0, 1, 2, 3 or 4,
- the symbol $x'' \geq 0$, and preferably x" = 0, 1, 2, 3 or 4, and
- the symbol z' is an integer greater than or equal to 1 and preferably z'=1 or 2.

**4.** Composition according to any one of the preceding claims, in which the polycondensation catalyst **M** is a complex of formula **(2)** below:

$$[Zn(C^1)_{n'}(C^2)_{n''}(L^1)_{y'}(L^2)_{y''}]_{z'} \quad \textbf{(2)}$$

in which:

- the symbols $C^1$ and $C^2$ are identical or different ligands chosen from the group of carboxylates,
- the symbols n' and n" represent the number of carboxylate ligands and are integers equal to 0, 1 or 2 with the condition that the sum n'+ n"= 2,
- the symbols $L^1$ and $L^2$ are identical or different ligands chosen from the group of amines,
- the symbols y' and y" represent the number of amine ligands and are integers equal to 0, 1 or 2 with the condition that the sum y'+ y"= 1 or 2, and
- the symbol z' is an integer greater than or equal to 1 and preferably z'=1 or 2 and even more preferentially z'=1.

**5.** Composition according to any one of the preceding claims, in which the polycondensation catalyst **M** is a complex of formula **(3)** below:

$$[Zn(C^1)_2(L^1)_{y'}]_{z'} \quad \textbf{(3)}$$

in which:

- the symbol $C^1$ is a ligand chosen from the group of carboxylates,
- the symbol $L^1$ is a ligand chosen from the group of amines,
- the symbol y' is a number equal to 1 or 2, and
- the symbol z' is an integer greater than or equal to 1 and preferably the symbol z'=1, 2, 3 or 4 and even more preferentially z'=1 or 2.

**6.** Composition according to any one of Claims 3 to 5, in which the ligand of amine type $L^1$ or $L^2$ is chosen from the group consisting of primary monoamines of alkylamine type containing in total from 1 to 40 carbon atoms for the alkyl radical, secondary monoamines of dialkylamine type containing in total from 2 to 40 carbon atoms for the alkyl radicals, tertiary monoamines of trialkylamine type containing in total from 3 to 60 carbon atoms for the alkyl radicals, alkyl diamines containing in total from 1 to 40 carbon atoms for the alkyl radicals and amino silanes, and even more preferentially the ligands $L^1$ and $L^2$ are chosen from the group consisting of secondary monoamines of dialkylamine type containing in total from 2 to 20 carbon atoms and primary monoamines of alkylamine type containing in total from 1 to 40 carbon atoms for the alkyl radical.

**7.** Composition according to any one of Claims 3 to 5, in which the ligand of amine type $L^1$ or $L^2$ is chosen from the group consisting of the following amines: N,N-dimethylethylenediamine, N,N'-dimethylethylenediamine, N,N,N'-trimethylethylenediamine, N,N'-diisopropylethylenediamine, n-butylamine, n-propylamine, n-heptylamine, n-octylamine, n-nonylamime, tert-butylamine, isopropylamine, 2-ethylhexylamine, decylamine, dodecylamine, which may be linear or branched, N-methyl-N-butylamine, N,N-dipropylamine, N,N- diisopropylamine, N-ethyl-N-butylamine, N,N-dibutylamine, N,N-dimethyl-N-butylamine, di(n-octyl)amine, N-n-propylethylenediamine, N,N,N',N'-tetramethylethylenediamine, 3-aminopropyltrimethoxysilane and 3-aminopropylmethyldiethoxysilane.

**8.** Composition according to any one of Claims 3, 4 and 5, in which the ligand of carboxylate type $C^1$ or $C^2$ is chosen from the group consisting of the carboxylates of empirical formula $[C_{10}H_{19}O_2]^-$.

**9.** Composition according to any one of the preceding claims, in which the polycondensation catalyst **M** is a complex of formula **(3)** below:

$$[Zn(C^1)_2(L^1)_{y'}]_{z'} \quad \textbf{(3')}$$

in which:

- the symbol $C^1$ is a neodecanoate or naphthenate ligand or a 2-ethylhexanoate ligand,
- the symbol $L^1$ is a ligand chosen from the group consisting of the following compounds: N,N-dimethylethylenediamine, N,N'-dimethylethylenediamine, N,N,N'-trimethylethylenediamine, N,N'-diisopropylethylenediamine, n-butylamine, n-propylamine, n-heptylamine, n-octylamine, n-nonylamime, tert-butylamine, isopropylamine, 2-ethylhexylamine, decylamine, dodecylamine, which may be linear or branched, N-methyl-N-butylamine, N,N-dipropylamine, N,N-diisopropylamine, N-ethyl-N-butylamine, N,N-dibutylamine, N,N-dimethyl-N-butylamine, di(n-octyl)amine, N-n-propylethylenediamine, N,N'-dimethylethylenediamine, N,N,N',N'-tetramethylethylenediamine, 3-aminopropyltrimethoxysilane and 3-aminopropylmethyldiethoxysilane,
- the symbol y' is an integer equal to 1 or 2, and
- the symbol z' = 1, 2, 3 or 4 and preferably z'=1 or 2.

**10.** Composition according to any one of the preceding claims, in which the polycondensation catalyst **M** is a complex chosen from the group consisting of the following complexes:

- [Zn(naphthenate)$_2$(bis(2-ethylhexyl)amine)],
- [Zn(naphthenate)$_2$(bis(2-ethylhexyl)amine)$_2$],
- [Zn(naphthenate)$_2$(diisononylamine)],
- [Zn(naphthenate)$_2$(diisononylamine)$_2$],
- [Zn(naphthenate)$_2$(di(n-octyl)amine)],
- [Zn(naphthenate)$_2$(di(n-octyl)amine)$_2$],
- [Zn(naphthenate)$_2$(n-octylamine)],
- [Zn(naphthenate)$_2$(n-octylamine)$_2$],
- [Zn(naphthenate)$_2$(N,N-dibutylamine)],
- [Zn(naphthenate)$_2$(N,N-dibutylamine)$_2$],
- [Zn(naphthenate)$_2$(N,N-dimethyl-N-butylamine)$_2$],
- [Zn(naphthenate)$_2$(N,N-dimethyl-N-butylamine)$_2$],
- [Zn(naphthenate)$_2$(aminoethylaminopropyltrimethoxys ilane)],
- [Zn(naphthenate)$_2$(aminoethylaminopropyltrimethoxys ilane)$_2$],
- [Zn(naphthenate)$_2$(aminopropyltriethoxysilane)],
- [Zn(naphthenate)$_2$(aminopropyltriethoxysilane)$_2$],
- [Zn(neodecanoate)$_2$(di(n-octyl)amine)],
- [Zn(neodecanoate)$_2$(di(n-octyl)amine)]$_2$],
- [Zn(neodecanoate)$_2$(n-octylamine)],
- [Zn(neodecanoate)$_2$(n-octylamine)$_2$],
- [Zn(neodecanoate)$_2$(N,N-dibutylamine)],
- [Zn(neodecanoate)$_2$(N,N-dibutylamine)$_2$],
- [Zn(neodecanoate)$_2$(3-aminopropyltrimethoxysilane)$_2$],
- [Zn(neodecanoate)$_2$(3-aminopropylmethyldiethoxysilane)$_2$],
- [Zn(neodecanoate)$_2$ (aminoethylaminopropyltrimethoxysilane)],
- [Zn(neodecanoate)$_2$ (aminoethylaminopropyltrimethoxysilane)$_2$],
- [Zn(neodecanoate)$_2$ (aminopropyltriethoxysilane)],
- [Zn(neodecanoate)$_2$ (aminopropyltriethoxysilane)$_2$],
- [Zn(neodecanoate)$_2$(bis(2-ethylhexyl)amine)],
- [Zn(neodecanoate)$_2$(bis(2-ethylhexyl)amine)$_2$],
- [Zn(neodecanoate)$_2$(diisononylamine)],
- [Zn(neodecanoate)$_2$(diisononylamine)$_2$],
- [Zn(2-ethylhexanoate)$_2$(N,N-dibutylamine)]
- [Zn(2-ethylhexanoate)$_2$(N,N-dibutylamine)$_2$],
- [Zn(2-ethylhexanoate)$_2$(n-octylamine)],
- [Zn(2-ethylhexanoate)$_2$(n-octylamine)$_2$],
- [Zn(2-ethylhexanoate)$_2$(bis(2-ethylhexyl)amine)],
- [Zn(2-ethylhexanoate)$_2$(bis(2-ethylhexyl)amine)$_2$],
- [Zn(2-ethylhexanoate)$_2$(diisononylamine)],
- [Zn(2-ethylhexanoate)$_2$(diisononylamine)$_2$]and
- mixtures thereof.

**11.** Composition according to Claim 1, in which the organosilicon compound **A** is a polyorganosiloxane comprising:

(i) at least two siloxyl units of formula **(4)** below:

$$R^1_a Z_b SiO_{\left(\frac{4-(a+b)}{2}\right)}$$

**(4)**

in which:

- the symbols $R^1$, which may be identical or different, represent $C_1$ to $C_{30}$ monovalent hydrocarbon-based radicals,
- the symbols Z, which may be identical or different, each represent a hydrolyzable and condensable group or a hydroxyl group and are preferably chosen from the group consisting of groups of the following types: hydroxyl, alkoxy, alkoxy-alkylene-oxy, amino, amido, acylamino, aminoxy, iminoxy, ketiminoxy, acyloxy, iminoxy, ketiminoxy and enoxy,
- a is equal to 0, 1 or 2, b is equal to 1, 2 or 3, the sum a + b is equal to 1, 2 or 3, and optionally

(ii) one or more siloxyl units of formula **(5)** below:

$$R_c SiO_{\left(\frac{4-c}{2}\right)}$$

(**5**)

in which:

- the symbols R, which may be identical or different, represent $C_1$ to $C_{30}$ monovalent hydrocarbon-based radicals optionally substituted with one or more halogen atoms or with amino, ether, ester, epoxy, mercapto or cyano groups, and
- the symbol c is equal to 0, 1, 2 or 3.

**12.** Composition according to Claim 1, in which the crosslinking agent **B** is preferably a silicon compound, each molecule of which comprises at least three hydrolyzable and condensible groups **Y** and said crosslinking agent **B** having the formula **(7)** below:

$$R'_{(4-a)}SiY_a \qquad \textbf{(7)}$$

in which formula:

- the symbol R' is a monovalent hydrocarbon-based radical comprising from 1 to 30 carbon atoms,
- the symbol Y is an alkoxy, alkoxy-alkylene-oxy, amino, amido, acylamino, aminoxy, iminoxy, ketiminoxy, acyloxy or enoxy group and preferably Y is an alkoxy, acyloxy, enoxy, ketiminoxy or oxime group,
- the symbol a = 3 or 4.

**13.** Composition according to any one of Claims 1 to 12, not containing any catalyst containing in its structure at least one tin atom.

**14.** Composition according to any one of Claims 1 to 13, in which the polycondensation catalyst **M** is the only polycondensation catalyst present in said composition, which may optionally contain at least one functionalization catalyst.

**15.** RTV-2 two-pack composition, the precursor of the composition as defined according to any one of Claims 1 to 14, which is in two separate packages **P1** and **P2, characterized in that**:

- the package **P1,** which is airtight, comprises:

  - a catalytically effective amount of at least one polycondensation catalyst **M** as defined according to any one of Claims 1 to 10, and
  - at least one crosslinking agent **B** preferably as defined according to Claim 12, and

- the package **P2** does not contain said polycondensation catalyst **M** and said crosslinking agent **B** and comprises:

  - per 100 parts by weight of at least one organosilicon compound **A** as defined according to Claim 1 or 11, and
  - from 0 to 10 part(s) by weight of water.

**16.** RTV-2 two-pack composition for molding application, the precursor of the composition as defined according to any one of Claims 1 to 14, which is in two separate packages **P1** and **P2, characterized in that**:

- the package **P1,** which is airtight, comprises:

  - a catalytically effective amount of at least one polycondensation catalyst **M** as defined according to any one of Claims 1 to 10, and
  - at least one crosslinking agent **B** preferably as defined according to Claim 12, and

- the package **P2** does not contain said polycondensation catalyst **M** and said crosslinking agent **B** and comprises:

  - per 100 parts by weight of at least one organosilicon compound **A** which is a $\alpha,\omega$-dihydroxylated polydimethylsiloxane whose dynamic viscosity at 25°C is between 2000 mPa.s and 5000 mPa.s and preferably between 3000 mPa.s and 4000 mPa.s, and
  - from 0 to 10 part(s) by weight of water.

**17.** RTV-1 one-pack composition which is in a single airtight package **P,** comprising:

a) at least one organosilicon compound **A** comprising at least two identical or different hydrolyzable and condensable groups, or at least two silanol functions ≡SiOH, and preferably as defined according to Claim 11,
b) at least one crosslinking agent **B** preferably as defined according to Claim 12, and
c) a catalytically effective amount of at least one polycondensation catalyst **M** as defined according to any one of Claims 1 to 10, and
d) optionally at least one filler **C.**

**18.** Elastomer obtained:

- after mixing the contents of the packages **P1** and **P2** of the RTV-2 two-pack composition as defined according to Claim 15 or 16 and leaving the mixture to cure,
- after placing in contact with atmospheric moisture the contents of the package **P** of the RTV-1 one-pack composition as described according to Claim 18 and leaving said contents to cure, or
- after preparing the composition as described according to any one of Claims 1 to 14 or 16 and leaving the mixture to cure in the presence of water or of atmospheric moisture.

**19.** Process for coating the composition as defined according to any one of Claims 1 to 17 onto a flexible support **S** which is made of textile, paper, polyvinyl chloride, polyester, polypropylene, polyamide, polyethylene, polyurethane or polyethylene terephthalate, comprising the following steps a), b) and c):

a) a composition according to the invention and as defined in any one of Claims 1 to 14 is prepared,
b) said composition is then deposited in continuous or batch manner onto said flexible support **S,** and
c) said silicone composition is left to crosslink in the presence of moisture provided by the ambient air or by prior addition of water so as to form a silicone elastomer.

**20.** Use of a polycondensation catalyst **M** as defined according to any one of Claims 1 to 10, as a catalyst for the polycondensation reaction of a silicon compound comprising at least two identical or different hydrolyzable and condensable groups, or at least two silanol functions ≡SiOH.

**21.** Complex having the following formula:

- [Zn(naphthenate)$_2$(bis(2-ethylhexyl)amine)],
- [Zn(naphthenate)$_2$(bis(2-ethylhexyl)amine)$_2$],
- [Zn(naphthenate)$_2$(diisononylamine)],
- [Zn(naphthenate)$_2$(diisononylamine)$_2$],
- [Zn(naphthenate)$_2$(di(n-octyl)amine)],
- [Zn(naphthenate)$_2$(di(n-octyl)amine)$_2$],
- [Zn(naphthenate)$_2$(n-octylamine)],
- [Zn(naphthenate)$_2$(n-octylamine)$_2$],
- [Zn(naphthenate)$_2$(N,N-dibutylamine)],
- [Zn(naphthenate)$_2$(N,N-dibutylamine)$_2$],
- [Zn(naphthenate)$_2$(N,N-dimethyl-N-butylamine)$_2$],
- [Zn(naphthenate)$_2$(N,N-dimethyl-N-butylamine)$_2$],
- [Zn(naphthenate)$_2$(aminoethylaminopropyltrimethoxys ilane)],
- [Zn(naphthenate)$_2$(aminoethylaminopropyltrimethoxys ilane)$_2$],
- [Zn(naphthenate)$_2$(aminopropyltriethoxysilane)],
- [Zn(naphthenate)$_2$(aminopropyltriethoxysilane)$_2$],
- [Zn(neodecanoate)$_2$(di(n-octyl)amine)],
- [Zn(neodecanoate)$_2$(di(n-octyl)amine)]$_2$],
- [Zn(neodecanoate)$_2$(n-octylamine)],
- [Zn(neodecanoate)$_2$(n-octylamine)$_2$],
- [Zn(neodecanoate)$_2$(N,N-dibutylamine)],
- [Zn(neodecanoate)$_2$(N,N-dibutylamine)$_2$],
- [Zn(neodecanoate)$_2$(3-aminopropyltrimethoxysilane)$_2$],
- [Zn(neodecanoate)$_2$(3-aminopropylmethyldiethoxysilane)$_2$],
- [Zn(neodecanoate)$_2$ (aminoethylaminopropyltrimethoxysilane)],
- [Zn(neodecanoate)$_2$ (aminoethylaminopropyltrimethoxysilane)$_2$],
- [Zn(neodecanoate)$_2$ (aminopropyltriethoxysilane)],
- [Zn(neodecanoate)$_2$ (aminopropyltriethoxysilane)$_2$],
- [Zn(neodecanoate)$_2$(bis(2-ethylhexyl)amine)],
- [Zn(neodecanoate)$_2$(bis(2-ethylhexyl)amine)$_2$],
- [Zn(neodecanoate)$_2$(diisononylamine)],
- [Zn(neodecanoate)$_2$(diisononylamine)$_2$],
- [Zn(2-ethylhexanoate)$_2$(N,N-dibutylamine)]
- [Zn(2-ethylhexanoate)$_2$(N,N-dibutylamine)$_2$],
- [Zn(2-ethylhexanoate)$_2$(n-octylamine)],
- [Zn(2-ethylhexanoate)$_2$(n-octylamine)$_2$],
- [Zn(2-ethylhexanoate)$_2$(bis(2-ethylhexyl)amine)],
- [Zn(2-ethylhexanoate)$_2$(bis(2-ethylhexyl)amine)$_2$],
- [Zn(2-ethylhexanoate)$_2$(diisononylamine)], and
- [Zn(2-ethylhexanoate)$_2$(diisononylamine)$_2$].

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2557582 A
- FR 2786497 A
- EP 147323 A
- EP 235049 A
- FR 1126411 A
- FR 1179969 A
- FR 1189216 A
- FR 1198749 A
- FR 1248826 A
- FR 1314649 A
- FR 1423477 A
- FR 1432799 A
- FR 2067636 A
- WO 9829488 A
- FR 978058 A
- FR 1025150 A
- FR 1108764 A
- FR 1370884 A
- EP 118325 A
- EP 117772 A
- EP 10478 A
- EP 50358 A
- EP 184966 A
- US 3801572 A
- US 3888815 A
- EP 141685 A
- EP 102268 A
- EP 21859 A
- FR 2121289
- FR 2121631
- US 3517001 A
- US 4115356 A
- US 4180642 A
- US 4273698 A
- US 4356116 A
- EP 31996 A
- EP 74001 A
- US 20080207938 A


### Littérature non-brevet citée dans la description


- **NOLL.** Chemistry and Technology of silicones. Academic Press, 1968, 337
- **DIDIER ASTRUC.** Chimie Organométallique. EDP Sciences, 2000
- Les complexes monométalliques. 31